(19) Europäisches Patentamt / European Patent Office / Office européen des brevets

(11) **EP 3 859 677 A1**

(12) **EUROPEAN PATENT APPLICATION**
published in accordance with Art. 153(4) EPC

(43) Date of publication:
04.08.2021 Bulletin 2021/31

(51) Int Cl.:
*G06T 7/60* (2017.01)    *G08G 1/16* (2006.01)

(21) Application number: 19864121.9

(22) Date of filing: 18.03.2019

(86) International application number:
PCT/JP2019/011181

(87) International publication number:
WO 2020/066072 (02.04.2020 Gazette 2020/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 25.09.2018 JP 2018179483

(71) Applicant: Faurecia Clarion Electronics Co., Ltd.
Saitama-shi, Saitama 330-0081 (JP)

(72) Inventors:
• MACHII, Kimiyoshi
Tokyo 100-8280 (JP)
• SHIMIZU, Naoki
Saitama-shi, Saitama 330-0081 (JP)
• ENOMOTO, Ayano
Saitama-shi, Saitama 330-0081 (JP)

(74) Representative: Lavoix
Bayerstraße 83
80335 München (DE)

(54) **SECTIONING LINE RECOGNITION DEVICE**

(57) A division line recognition apparatus includes: a travel amount estimation unit that estimates a travel amount of a vehicle; a division line position estimation unit that estimates positions of white line candidates from each of images captured by a plurality of cameras: a division line candidate selection unit that selects at least one of the plurality of white line candidates on the basis of the travel amount of the vehicle and changes in the positions of the white line candidates; a division line position decision unit that decides a position of a division line at present from the selected white line candidate(s); and a reference position setting unit that sets a reference position for the division line on the basis of the travel amount of the vehicle and the position of the division line decided before the passage of time, wherein the division line position decision unit decides the white line candidate which is closest to the reference position, which is set by the reference position setting unit, as the position of the division line at present.

FIG.2

EP 3 859 677 A1

**Description**

TECHNICAL FIELD

The present invention relates to an apparatus for recognizing division lines on a road.

BACKGROUND ART

Conventionally, there is a known apparatus(es) for recognizing division lines (white lines), which exist around a vehicle, on the road on the basis of images captured respectively by a plurality of cameras. PTL 1 discloses an apparatus for estimating the position of an own vehicle, wherein the apparatus includes: a vehicle speed detection means that detects a vehicle speed of a vehicle; an image capturing means that is mounted in the vehicle and captures images of right and left white lines which divides a lane where the vehicle runs; an edge extraction means that extracts edges of the white lines from the images captured by the image capturing means; an edge retaining means that retains the edges extracted by the edge extraction means by associating the edges with coordinates on the images; an edge update means that updates the edges which are retained by the edge retaining means, by moving the edges as much as a travel amount of the vehicle according to the vehicle speed to an opposite side of a vehicle traveling direction; a white line recognition means that recognizes the white lines by linearly interpolating the edges retained by the edge retaining means; and a position posture estimation means that estimates a position and posture of the vehicle within the white lines recognized by the white line recognition means.

CITATION LIST

PATENT LITERATURE

PTL 1: Japanese Patent Application Laid-Open (Kokai) Publication No. 2015-64735

SUMMARY OF THE INVENTION

PROBLEMS TO BE SOLVED BY THE INVENTION

With the own vehicle position estimation apparatus of PTL 1, even if the respective cameras capture the same division line, differences in the position of the division line recognized from the respective images may be caused by influences of, for example, quantization errors, calibration errors, and the shape of a road. If the vehicle is controlled by using the division line recognition result in the above-described case, there is fear that changes in the position of the division line in every frame might not be consistent with behaviors of the vehicle, thereby leading to destabilization of the vehicle control.

For example, regarding automatic driving such as lane keeping, if the own vehicle is controlled to run in the vicinity of the center of the lane, the own vehicle is made to move to the right and to the left in association with changes in the positions of the white lanes and the own vehicle's behaviors thereby become unstable. Therefore, the technology capable of accurately recognizing the position(s) of the division line(s) on the road is required for the division line recognition apparatus using a plurality of cameras.

MEANS TO SOLVE THE PROBLEMS

A division line recognition apparatus according to the present invention is an apparatus for identifying a position(s) of a division line(s) on a road from a plurality of images captured with passage of time by a plurality of cameras mounted in a vehicle, wherein the division line recognition apparatus includes: a travel amount estimation unit that estimates a travel amount of the vehicle with the passage of time; a division line position estimation unit that estimates positions of white line candidates indicating division lines with reference to a position of the vehicle from each of the images captured by the plurality of cameras: a division line candidate selection unit that selects at least one of the plurality of white line candidates on the basis of the travel amount of the vehicle with the passage of time, which is estimated by the travel amount estimation unit, and changes with the passage of time in the positions of the white line candidates which are estimated by the division line position estimation unit; a division line position decision unit that decides a position of a division line at present from the white line candidate selected by the division line candidate selection unit; and a reference position setting unit that sets a reference position for the division line on the basis of the travel amount of the vehicle, which is estimated by the travel amount estimation unit, and the position of the division line decided by the division line position decision unit before the passage of time, wherein the division line position decision unit decides the white line candidate which is closest to the reference position, which is set by the reference position setting unit, as the position of the division line at present.

ADVANTAGEOUS EFFECTS OF THE INVENTION

The position(s) of the division line(s) on the road can be recognized accurately according to the present invention.

BRIEF DESCRIPTION OF DRAWINGS

Fig. 1 is a diagram illustrating an example of a hardware configuration of a division line recognition apparatus according to one embodiment of the present invention;
Fig. 2 is a diagram illustrating an example of a functional configuration of a division line recognition apparatus according to a first embodiment of the present invention;
Fig. 3 is a diagram illustrating an example of a positional relationship between a recognition result of white line candidates and an own vehicle;
Fig. 4 is a diagram illustrating a processing flow of the division line recognition apparatus according to the first embodiment of the present invention;
Fig. 5 is a diagram illustrating the positions of division lines;
Fig. 6 is a diagram illustrating a processing flow when excluding inappropriate white line candidates;
Fig. 7 is a diagram illustrating a processing flow when setting a white line reference position;
Fig. 8 is a diagram illustrating a processing flow when deciding the distance from the own vehicle to a white line;
Fig. 9 is a diagram for explaining a specific example of processing for excluding the inappropriate white line candidates;
Fig. 10 is a diagram for explaining a specific example of the processing for setting the white line reference position and deciding the distance to the white line;
Fig. 11 is a diagram illustrating an example of a functional configuration of a division line recognition apparatus according to a second embodiment of the present invention;
Fig. 12 is a diagram illustrating a processing flow of the division line recognition apparatus according to the second embodiment of the present invention;
Fig. 13 is a diagram illustrating an example of a software configuration of a division line position decision unit for the division line recognition apparatus according to the second embodiment of the present invention;
Fig. 14 is a diagram illustrating an example of a functional configuration of a division line recognition apparatus according to a third embodiment of the present invention;
Fig. 15 is a diagram illustrating a processing flow of a lane change judgment unit for the division line recognition apparatus according to the third embodiment of the present invention;
Fig. 16 is a diagram illustrating an example of a data structure of a database for storing white line recognition results;
Fig. 17 is a diagram illustrating an example of a functional configuration of a division line recognition apparatus according to a fourth embodiment of the present invention;
Fig. 18 is a diagram illustrating a processing flow of the division line recognition apparatus according to the fourth embodiment of the present invention;
Fig. 19 is a diagram illustrating data used for processing for dealing with curved lines;
Fig. 20 is a diagram illustrating a processing flow for estimating a change in the position of the own vehicle;
Fig. 21 is a diagram illustrating a processing flow when excluding inappropriate white line candidates;
Fig. 22 is a diagram illustrating a processing flow when setting the white line reference position; and
Fig. 23 is a diagram illustrating a processing flow when deciding the distance from the own vehicle to the white line.

DESCRIPTION OF EMBODIMENTS

(First Embodiment)

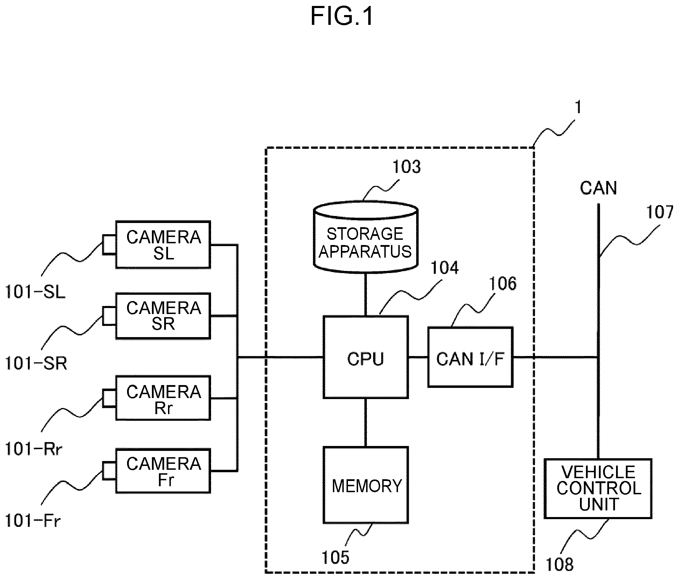

Fig. 1 is a diagram illustrating an example of a hardware configuration of an division line recognition apparatus according to one embodiment of the present invention. A division line recognition apparatus 1 illustrated in Fig. 1 is to recognize division lines on a road from a plurality of images captured respectively by a plurality of cameras mounted in a vehicle and includes a storage apparatus 103, a CPU 104, a memory 105, and a CAN I/F 106. The following cameras are coupled to the division line recognition apparatus 1: a front camera 101-Fr for monitoring an area ahead of the own vehicle; a rear camera 101-Rr for monitoring an area behind the own vehicle; a left-side camera 101-SL for monitoring the left side of the own vehicle; and a right-side camera 101-SR for monitoring the right side of the own vehicle. Furthermore, a vehicle control unit 108 is coupled via a CAN bus 107 to the division line recognition apparatus 1. Incidentally, in the example in Fig. 1, the above-described four cameras are coupled to the division line recognition apparatus 1; however, by inputting images captured by an arbitrary number of cameras to the division line recognition apparatus 1, the division line recognition apparatus 1 can recognize division lines on the road from each image. Therefore, in the following explanation, the above-described four cameras may not be distinguished from each other, but may be sometimes explained as a common camera 101.

The storage apparatus 103 stores various kinds of information and programs which are necessary for operations of the division line recognition apparatus 1. The CPU 104 executes a specified program stored in the storage apparatus 103 and thereby executes image processing by using the images input from each camera 101 and recognizes division lines (white lines) on the road, which exist around the own vehicle. Incidentally, in this embodiment, an explanation will be provided about an example of recognizing the white lines as the division lines on the road; however, the division lines which are objects to be recognized by the division line recognition apparatus 1 are not limited to the white lines. The division line recognition apparatus 1 can recognize any division lines as objects to be recognized as long as they exist on the road and can be recognized by the image processing. The memory 105 is a volatile storage medium and is used as a work area when the CPU 104 executes the image processing; and the memory 105 accumulates the recognition results of the division lines obtained by the image processing. Information of the division line recognition results accumulated in the memory 105 is output via a CAN I/F 106 to the CAN bus 107 and transmitted to the vehicle control unit 108. The vehicle control unit 108 uses the division line recognition results transmitted from the division line recognition apparatus 1 to perform various kinds of vehicle control according to a running status of the own vehicle, for example, to control steering of the own vehicle so that the own vehicle will not deviate from a driving lane.

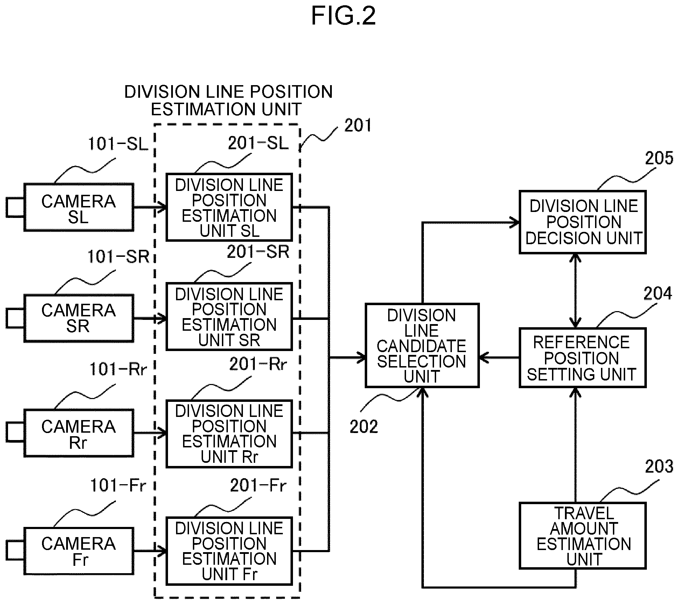

Fig. 2 is a diagram illustrating an example of a functional configuration of the division line recognition apparatus according to a first embodiment of the present invention. The division line recognition apparatus 1 according to this embodiment functionally has a division line position estimation unit 201, a division line candidate selection unit 202, a travel amount estimation unit 203, a reference position setting unit 204, and a division line position decision unit 205 as illustrated in Fig. 2. The division line position estimation unit 201 is configured of a front-camera division line position estimation unit 201-Fr, a rear-camera division line position estimation unit 201-Rr, a left-side-camera division line position estimation unit 201-SL, and a right-side-camera division line position estimation unit 201-SR which correspond to the front camera 101-Fr, the rear camera 101-Rr, the left-side camera 101-SL, and the right-side camera 101-SR, respectively. The division line recognition apparatus 1 implements these respective functional blocks by causing the CPU 104 to execute specified programs.

The images captured by the respective cameras 101 are transmitted to the division line position estimation unit 201 at specified time intervals. Each of the images which are input from each camera 101 at specified time intervals may hereinafter sometimes be referred to as a "frame." The division line position estimation unit 201 inputs a plurality of images, which are respectively captured by each camera 101, and estimates the position of each white line candidate with reference to the position of the own vehicle on the basis of these plurality of images. Specifically speaking, for example, the division line position estimation unit 201 extracts each of feature points corresponding to the white lines from the images captured by each camera 101 and recognizes white line candidates, which are candidates for the division lines existing around the own vehicle, on the basis of the feature points with respect to each captured image. Then, the division line position estimation unit 201 estimates the distance from the own vehicle to each white line candidate by transforming feature point coordinates on each recognized white line candidate to coordinates on a coordinate system which is preset with reference to the position of the own vehicle. The division line position estimation unit 201 can use the thus-acquired estimated value of the distance from the own vehicle to each white line candidate as the estimation result of the position of each white line candidate with reference to the position of the own vehicle. Incidentally, when estimating the distance from the own vehicle to each white line candidate, an equation of a straight line corresponding to each white line candidate is found on the basis of a set of the feature point coordinates, for example, by a method such as a least squares method or RANSAC (Random Sample Consensus) and coordinate values of the relevant straight line at a predetermined location such as a front wheel position of the own vehicle can be determined as the distance to each white line candidate.

Furthermore, the division line position estimation unit 201 can use, for example, a well-known method of edge extraction as a method for recognizing the white line candidates from the images. Specifically speaking, the division line position estimation unit 201 firstly extracts boundary edges whose luminance values correspond to black and white, respectively, from the images captured by each camera 101. Next, the division line position estimation unit 201 finds the distance between these extracted boundary edges; and if the distance between them corresponds to the width of the white line, the division line position estimation unit 201 extracts points corresponding to white on the boundary edge as feature point candidates. Then if a plurality of the extracted feature point candidates are aligned in a straight line shape and their length is equal to or more than a certain distance, the division line position estimation unit 201 recognizes that alignment as a white line candidate and extracts each feature point candidate as a candidate point corresponding to the white line. Incidentally, various methods other than the method described above can be thought of as the method for recognizing the white line candidates from the images and any method may be employed in this embodiment.

The travel amount estimation unit 203 estimates a travel amount of the own vehicle when the own vehicle runs on the road. The travel amount estimation unit 203 acquires, for example, information about changes in the position of the own vehicle from the vehicle control unit 108 in Fig. 1 and estimates the travel amount of the own vehicle between the respective frames of the images captured by each camera 101 on the basis of this information. The vehicle control unit 108 calculates the position, speed, and traveling direction of the own vehicle, respectively, by using, for example, a GPS, vehicle speed pulses, and a gyroscope sensor and outputs information indicating such calculation results to the division line recognition apparatus 1. The travel amount estimation unit 203 estimates the travel amount of the own vehicle by estimating a lateral position change amount of the own vehicle from an image capture time point of a previous frame by each camera 101 to an image capture time point of a current frame, that is, the travel amount in the right and left directions relative to the traveling direction of the own vehicle on the basis of these pieces of information which are input from the vehicle control unit 108. Incidentally, in this embodiment, an explanation will be provided about the example in which the travel amount estimation unit 203 estimates the lateral position change amount as the travel amount of the own vehicle; however, the travel amount estimation unit 203 can estimate an arbitrary physical amount as the travel amount of the own vehicle as long as such physical amount indicates a relative position change amount with respect to the own vehicle and the white lines existing around the own vehicle.

The reference position setting unit 204 sets a white line reference position at the image capture time point of the current frame on the basis of the travel amount of the own vehicle, which is estimated by the travel amount estimation unit 203, that is, the lateral position change amount and the white line position at the image capture time point of the previous frame which is decided by the division line position decision unit 205 in the previous processing. The white line reference position which is set by the reference position setting unit 204: is the position at which there is a high possibility that the white line may exist in at the image capture time point of the current frame; and is used by the division line position decision unit 205 when deciding the white line position. The white line reference position is calculated as, for example, the distance from the own vehicle.

The division line candidate selection unit 202 selects at least one of the plurality of white line candidates which are respectively recognized from the images captured by each camera 101, on the basis of the travel amount of the own vehicle estimated by the travel amount estimation unit 203, that is, the lateral position change amount and a position change(s) of each white line candidate between the frames, which is estimated by the division line position estimation unit 201. Then, the division line candidate selection unit 202 outputs the position of the relevant white line candidate in the current frame, which is estimated by the division line position estimation unit 201 with respect to the selected white line candidate, that is, the distance from the own vehicle to the relevant white line candidate to the division line position decision unit 205. Under this circumstance, the division line candidate selection unit 202 selects a white line candidate(s) which is consistent with the position change of the own vehicle, and excludes a white line candidate(s) which is not consistent with the position change of the own vehicle. For example, if the own vehicle has moved to the right direction, the white line on the left side of the own vehicle should move away from the own vehicle and the white line on the right side of the own vehicle should come closer to the own vehicle. Therefore, at least any white line candidate(s) which contradicts such movements is excluded as the white line candidate(s) which is not consistent with the position change of the own vehicle. If the white line candidate is thus selected, the division line candidate selection unit 202 outputs the distance from the own vehicle to the relevant white line candidate to the division line position decision unit 205.

The division line position decision unit 205 finally decides the position of the white line at the image capture time point of the current frame on the basis of the travel amount of the own vehicle which is estimated by the travel amount estimation unit 203, that is, the lateral position change amount and the history of the positions of the white line candidates estimated by the division line position estimation unit 201. In this embodiment, the division line position decision unit 205 decides the position of the white line at the image capture time point of the current frame on the basis of the position of the relevant white line candidate at the image capture time point of the current frame which is estimated by the division line position estimation unit 201 with respect to the white line candidate selected by the division line candidate selection unit 202, that is, the distance from the own vehicle to the relevant white line candidate, which is output from the division line candidate selection unit 202, and the white line reference position which is set by the reference position setting unit 204. Specifically speaking, for example, the distance to the white line candidate with a smallest difference from the reference position is selected from among the distances from the own vehicle to the respective white line candidates, which are output from the division line candidate selection unit 202; and the selected distance is decided as the distance from the own vehicle to the white line at the image capture time point of the current frame. Incidentally, the white line position decided by the division line position decision unit 205 is input to the reference position setting unit 204 and is used to set the reference position in the next frame.

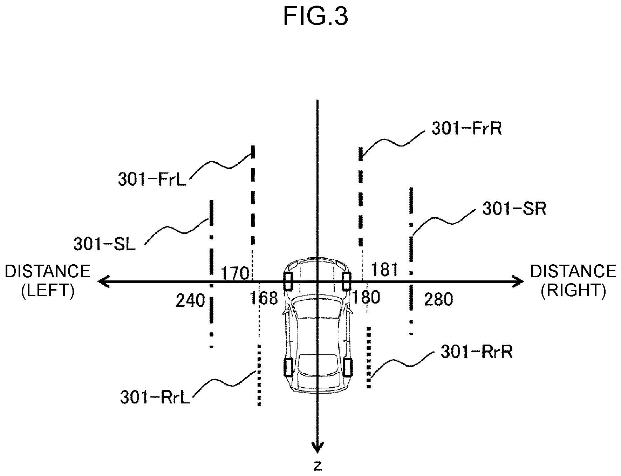

Fig. 3 is a diagram illustrating an example of a positional relationship between the recognition result of white line candidates and the own vehicle by the division line position estimation unit 201. Referring to Fig. 3, for example, it is assumed that white line candidates 301-FrL, 301-SL, 301-RrL are recognized respectively with respect to a white line existing on the left side of the own vehicle and, for example, white line candidates 301-FrR, 301-SR, 301-RrR are recognized respectively with respect to a white line existing on the right side of the own vehicle. Under this circumstance, the white line candidates 301-FrL, 301-SL, 301-RrL are white line candidates which are recognized by the front-camera division line position estimation unit 201-Fr, the left-side-camera division line position estimation unit 201-SL, and the rear-camera division line position estimation unit 201-Rr for the division line position estimation unit 201, respectively; and the white line candidates 301-FrR, 301-SR, 301-RrR are white line candidates which are recognized by the front-camera division line position estimation unit 201-Fr, the right-side-camera division line position estimation unit 201-SR, and the rear-camera division line position estimation unit 201-Rr for the division line position estimation unit 201, respectively. Specifically speaking, the division line position estimation unit 201 can recognize: two white lines existing on the right and left sides of the own vehicle from each of the images captured by the front camera 101-Fr and the rear camera 101-Rr, respectively; and one white line existing either on the right or left side of the own vehicle from each of the images captured by the left-side camera 101-SL and the right-side camera 101-SR, respectively.

Having recognized each white line candidate in Fig. 3, the division line position estimation unit 201 estimates the distance from a front wheel axle center to each white line candidate as the distance from the own vehicle to each white line candidate. In the example in Fig. 3, the distance to the white line candidate 301-FrL is 170 cm, the distance to the white line candidate 301-SL is 240 cm, the distance to the white line candidate 301-RrL is 168 cm, the distance to the white line candidate 301-FrR is 180 cm, the distance to the white line candidate 301-SR is 280 cm, and the distance to the white line candidate 301-RrR is 181 cm. Incidentally, in the example in Fig. 3, the front wheel axle center is set as an origin and the distance from here to each white line candidate is estimated; however, the distance to each white line candidate may be estimated by setting, besides the front wheel axle center, for example, a rear wheel axle center, front wheels, or rear wheels as the origin.

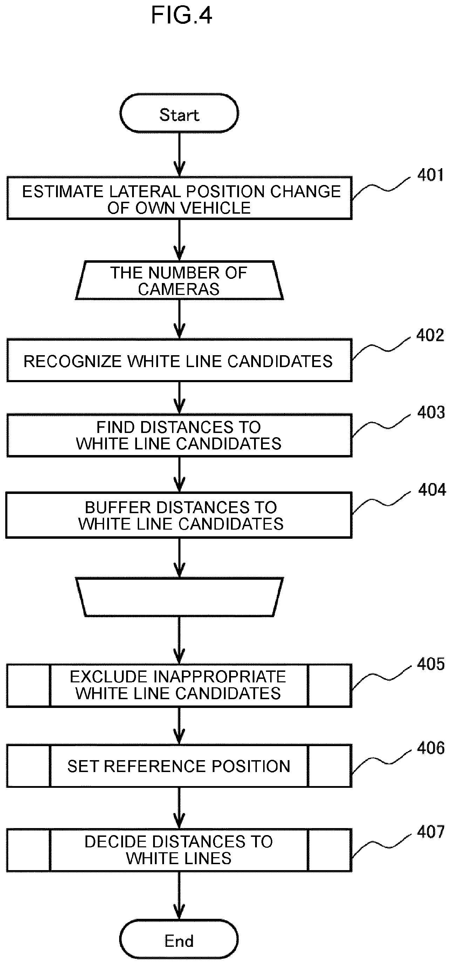

Next, a processing flow of the division line recognition apparatus 1 will be explained. Fig. 4 is a diagram illustrating a processing flow of the division line recognition apparatus according to the first embodiment of the present invention. Fig. 4 illustrates the processing for a one-frame image. Specifically, with the division line recognition apparatus 1 according to this embodiment, every time an image(s) is input at a specified frame rate from the camera 101, the CPU 104 executes the processing for recognizing the division lines from the image in accordance with the processing flow in Fig. 4.

In step 401, the travel amount estimation unit 203 is caused to estimate the travel amount of the own vehicle, that is, the lateral position change amount of the own vehicle. Under this circumstance, the lateral position change amount of the own vehicle from the previous processing is estimated on the basis of the information such as the position, speed, and traveling direction of the own vehicle which are input from the vehicle control unit 108 as described earlier. The lateral position change amount estimated by the travel amount estimation unit 203 in step 401 is stored in the memory 105.

After executing the processing of step 401, the division line recognition apparatus 1 executes processing of steps 402 to 404 with respect to each camera 101 as many times as the number of times according to the white line candidates which can be recognized by the relevant camera. Specifically, regarding the front camera 101-Fr and the rear camera 101-Rr, the processing of each of steps 402 to 404 is executed on the two right and left white lines; and regarding the left-side camera 101-SL and the right-side camera 101-SR, the processing of each of steps 402 to 404 is executed on the one white line on the right or left.

Firstly, in step 402, the division line position estimation unit 201 is caused to recognize the white line candidates in the images captured by each camera 101. Under this circumstance, the white lines are recognized, for example, according to the alignment of the feature points extracted from the images as explained earlier. However, the white lines may be recognized by using other algorithms and methods.

Next, in step 403, the division line position estimation unit 201 is caused to find the distance from the own vehicle to the white line candidate(s) recognized in step 402. Under this circumstance, the distance from the front wheel axle to the white line candidate is calculated as described earlier, for example, by transforming the feature points on the white line candidate to an equation of a straight line. Under this circumstance, regarding the white line candidate on the right side as viewed from the own vehicle, an intercept value in the equation of the straight line perpendicular to the front wheel axle directly becomes the distance to the white line candidate; and regarding the white line candidate on the left side, a value obtained by multiplying the intercept value by -1 becomes the distance to the white line candidate.

Incidentally, in step 403, the equation of the straight line in the world coordinate system can be found by transforming the coordinates of the feature points extracted from the image in step 402 from the coordinate system of the image to the world coordinate system of the front wheel axle center. Generally, the relationship between the image coordinates and the world coordinates can be described with external parameters and internal parameters for the cameras and the transformation to the world coordinates can be performed by using these camera parameters. Processing for acquiring the external parameters and the internal parameters for each camera 101 is generally called calibration processing and various technologies for implementing this processing are known. The calibration processing is executed in various ways, for example, there are a case where the calibration processing is executed only once at the time of shipment of the relevant automobile, and a case where the calibration processing is executed all the times while the automobile is running. With the division line recognition apparatus 1 according to this embodiment, the calibration result which has already been retained may be acquired when executing the processing of step 403; or the calibration processing may be acquired every time while the vehicle is running.

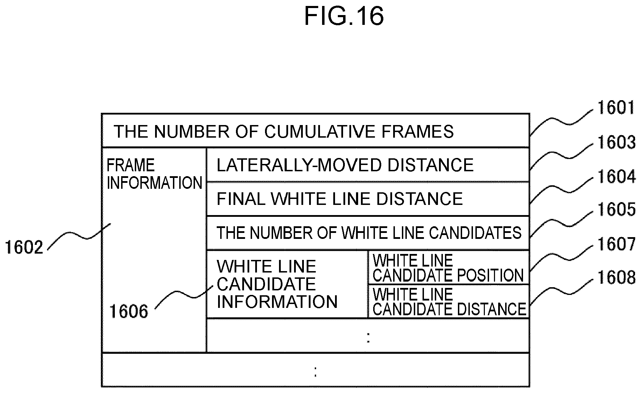

Next, in step 404, the distances to the white line candidates, which are found by the processing of step 403 are temporarily stored in the memory 105. A data structure of the storage destination at this time is, for example, as indicated in Fig. 16 described later. Incidentally, the distance unit should preferably be centimeters or meters, but other units may be used.

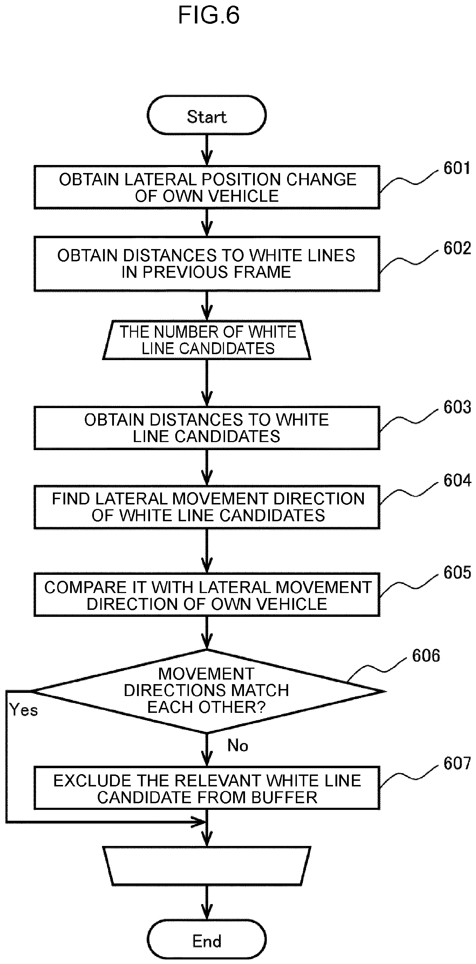

If the processing of steps 402 to 404 has been terminated with respect to each camera 101, the processing of steps 405 to 407 is subsequently executed. Firstly, in step 405, the division line candidate selection unit 202 is caused to exclude an inappropriate white line candidate(s) from among the white line candidates recognized by the processing of steps 402 to 404. This processing is to select a white line candidate which should be a target of the subsequent processing, by excluding any white line candidate(s) which is not consistent with the position change of the own vehicle as described earlier. Incidentally, the details of the processing of step 405 will be explained later with reference to the processing flow in Fig. 6.

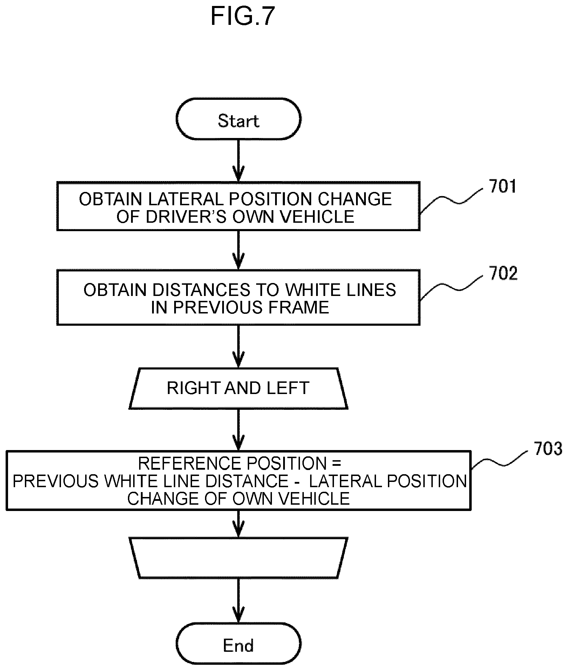

Next, in step 406, the reference position setting unit 204 is caused to set the white line reference position at the image capture time point of the current frame. This processing is processing as described earlier for setting, as the white line reference position, the position regarding which there is a high possibility that the white line may exist at the image capture time point of the current frame. Incidentally, the details of the processing of step 406 will be explained later with reference to the processing flow in Fig. 7.

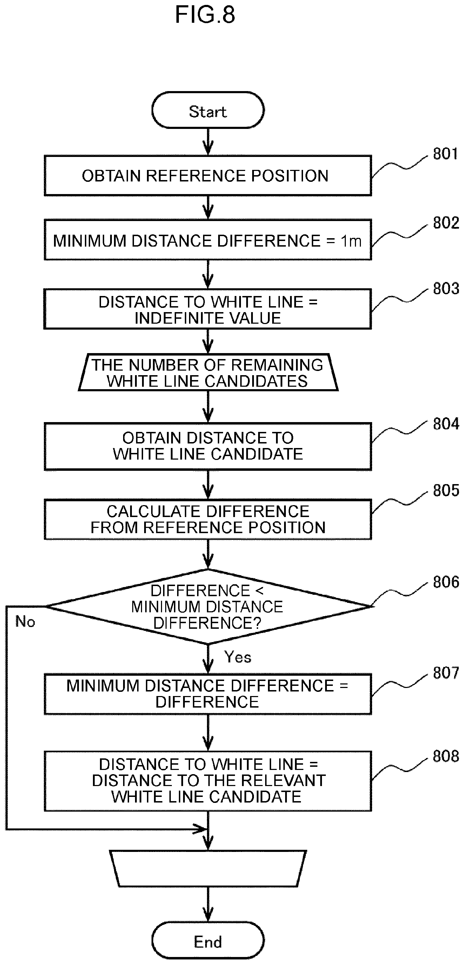

Finally, in step 407, the division line position decision unit 205 is caused to decide the distance from the own vehicle to the white line as the position of the white line at the image capture time point of the current frame. This processing is processing to: compare the distance to each white line candidate, which remains after excluding the inappropriate white line candidate(s) in step 405, with the reference position which is set in step 406; and finally decide the position of the white line at the image capture time point of the current frame on the basis of the comparison result. Incidentally, the details of the processing of step 407 will be explained later with reference to the processing flow in Fig. 8.

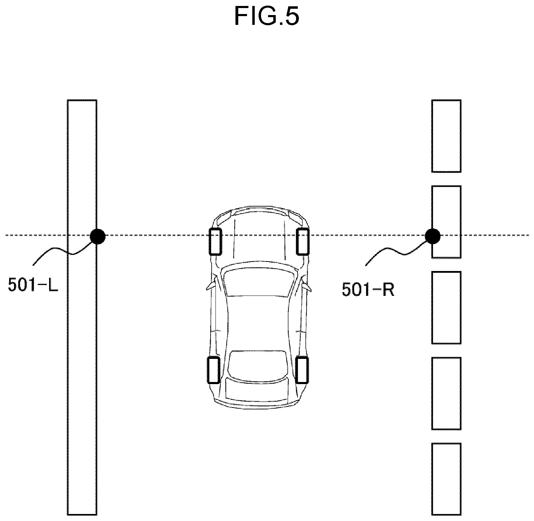

Fig. 5 is a diagram illustrating the positions of division lines used in this embodiment. The position regarding the division line on the left side is a point 501-L; and the position regarding the division line on the right side is a point 501-R. Specifically, they are edges of the right and left division lines which are on an extension line of the front wheel axle and are located on the sides of the right and left division lines closer to the own vehicle. Incidentally, this is one example of how to decide the positions of the division lines and a rear wheel axle or a center position of the own vehicle may be set as the reference. However, in consideration of the application of embodiments of the present invention to the automatic driving technology such as lane keeping, it is reasonable to adopt the edges of the division lines closer to the own vehicle as the positions of the division lines from among the edges of the division lines; and it is not expected to use the edges farther from the own vehicle.

Under this circumstance, both the positions of the point 501-L and the point 501-R are blind spots from the camera 101-Rr and the camera 101-Fr. However, the positions of the point 501-L and the point 501-R can be estimated by having each camera 101 recognize the division lines within the range capable of capturing images and finding the equation by approximating them to a straight line or a curved line.

Fig. 6 is a diagram illustrating a processing flow when excluding an inappropriate white line candidate(s) in step 405. Firstly, in step 601, the division line candidate selection unit 202 acquires the travel amount of the own vehicle which is estimated by the travel amount estimation unit 203 in step 401, that is, the lateral position change amount of the own vehicle. Incidentally, the estimation result of the lateral position change amount of the own vehicle by the travel amount estimation unit 203 is stored in, for example, the memory 105 for the division line recognition apparatus 1. The division line candidate selection unit 202 executes the processing of step 601 by reading this from the memory 105.

Next, in step 602, the division line candidate selection unit 202 acquires the positions of the white lines with reference to the position of the own vehicle in the previous frame, that is, the distances from the own vehicle to the respective right and left white lines. Under this circumstance, the division line candidate selection unit 202 reads data of the distances, which are respectively decided in step 407 with respect to the white lines on the right and left sides of the own vehicle in the previous processing and are stored in the memory 105, from the memory 105.

The division line candidate selection unit 202 executes the processing of each of steps 603 to 607 with respect to each white line candidate regarding which the distance from the own vehicle is acquired in step 403. In step 603, the division line candidate selection unit 202 acquires the distance from the own vehicle to the relevant white line candidate. Under this circumstance, the division line candidate selection unit 202 reads the data stored in step 404 from the memory 105.

In step 604, the division line candidate selection unit 202 finds a lateral movement direction of the relevant white line candidate with reference to the own vehicle. Under this circumstance, the division line candidate selection unit 202 finds the position change of the relevant white line, that is, to which direction, either right or left, the relevant white line has moved from its position relative to the own vehicle in the previous frame by comparing the distance to the relevant white line candidate in the current frame, which is acquired in step 603 of the current processing, with the distance to the relevant white line candidate in the previous frame which is acquired in step 603 of the previous processing.

In step 605, the division line candidate selection unit 202 compares the lateral movement direction of the own vehicle indicated by the lateral position change amount of the own vehicle acquired in step 601 with the lateral movement direction of the relevant white line candidate which is found in step 604.

In step 606, the division line candidate selection unit 202 judges whether the lateral movement direction of the relevant white line candidate matches the lateral movement direction of the own vehicle or not, on the basis of the comparison result in step 605. Under this circumstance, if the lateral movement direction of the relevant white line candidate is an opposite direction of the lateral movement direction of the own vehicle, that is, if the relevant white line candidate has moved to the left direction relative to the own vehicle when the own vehicle has moved to the right direction, or if the relevant white line candidate has moved to the right direction relative to the own vehicle when the own vehicle has moved to the left direction, the division line candidate selection unit 202 determines that these movement directions match each other. In that case, the division line candidate selection unit 202 does nothing and directly proceeds to the processing on the next white line candidate. On the other hand, if the lateral movement direction of the own vehicle and the lateral movement direction of the relevant white line candidate are the same direction, or if the lateral movement of the relevant white line candidate is 0 when the lateral movement of the own vehicle is not 0, the division line candidate selection unit 202 determines that these movement directions do not match each other. In that case, the division line candidate selection unit 202: excludes the relevant white line candidate from targets of the subsequent processing by proceeding to step 607 and deleting the data of the relevant white line candidate from the memory 105; and then proceeds to the processing on the next white line candidate.

If the processing of steps 603 to 607 has been executed on all the white line candidates, the division line candidate selection unit 202 terminates the processing flow in Fig. 6 and completes the processing of step 405.

In step 405 in Fig. 4, by executing the above-explained processing, an appropriate white line candidate is selected by excluding the white line candidate(s) which is not consistent with the position change of the own vehicle, from among the white line candidates recognized from the images captured by each camera 101.

Fig. 7 is a diagram illustrating a processing flow when setting the white line reference position in step 406. Firstly, in step 701, the reference position setting unit 204 acquires the travel amount of the own vehicle which is estimated by the travel amount estimation unit 203, that is, the lateral position change amount of the own vehicle. Under this circumstance, the reference position setting unit 204 reads the estimation result of the lateral position change amount of the own vehicle, which is performed by the travel amount estimation unit 203 in step 401, from the memory 105 in the same manner as in step 601 described earlier.

Next, in step 702, the reference position setting unit 204 acquires the positions of the white lines with reference to the position of the own vehicle in the previous frame, that is, the distance from the own vehicle to each of the right and left white lines. Under this circumstance, in the same manner as in step 602 described earlier, the data of the distances, which were decided in step 407 with respect to the white lines on the right and left sides of the own vehicle, respectively, in the previous processing and are stored in the memory 105, are read from the memory 105.

Finally, in step 703, the reference position setting unit 204 calculates the reference position with respect to each of the right and left white lines. Under this circumstance, the reference position setting unit 204 calculates the reference position for each of the white line existing on the left side of the own vehicle and the white line existing on the right side of the own vehicle by adding or subtracting the lateral position change amount of the own vehicle, which is acquired in step 701, to or from the distance from the own vehicle to the relevant white line in the previous frame which is acquired in step 702. The calculation results of the reference positions are stored in the memory 105.

If the processing of step 703 has been executed with respect to both the right and left white lines, the reference position setting unit 204 terminates the processing flow in Fig. 7 and completes the processing of step 406.

In step 406 in Fig. 4, by executing the above-described processing, the position regarding which there is a high possibility that a white line may exist at the image capture time point of the current frame is set as the white line reference position with respect to each of the right and left sides of the own vehicle.

Fig. 8 is a diagram illustrating a processing flow when deciding the distance from the own vehicle to the white line in step 407. Firstly, in step 801, the division line position decision unit 205 acquires the reference positions which are set by the reference position setting unit 204. Under this circumstance, the reference positions which are respectively set to the right and left white lines by the reference position setting unit 204 by executing step 406 are read from the memory 105.

Next, in step 802, the division line position decision unit 205 sets a minimum distance difference to an initial value which is 1 m. This minimum distance difference is used as a variable in the subsequent processing. Incidentally, in step 802, an arbitrary value can be set as the initial value of the minimum distance difference; however, it is desirable to set a realistic distance for the own vehicle to move between the frames. In this embodiment, the initial value of the minimum distance difference is set as 1 m.

Then, in step 803, the division line position decision unit 205 sets an indefinite value as an initial value of the distance to the relevant white line with respect to each of the right and left white lines. The value of this indefinite value may be an arbitrary value; however, it is desirable to set the distance which cannot happen in normal driving.

Incidentally, each processing of the above-described steps 802 and 803 is initialization of the minimum distance difference and the distances to the white lines, which are variables. The values of these variables are sequentially updated by the subsequent processing of steps 804 to 808.

The division line position decision unit 205 executes the processing of each of steps 804 to 808 with respect to each white line candidate which has remained without being excluded in step 405, from among the white line candidates regarding which the distances from the own vehicle are acquired in step 403. Incidentally, the right and left white lines are distinguished from each other in the processing of steps 804 to 808 explained below. Specifically, the minimum distance difference and the distance to the white line are updated on the basis of the result of the comparison with the reference position with respect to the white line on the side corresponding to the relevant white line candidate among the white lines existing on the right and left sides of the own vehicle.

In step 804, the division line position decision unit 205 acquires the distance from the own vehicle to the relevant white line candidate. Under this circumstance, the data stored in step 404 is read from the memory 105.

Next, in step 805, the division line position decision unit 205 calculates the difference between the distance to the relevant white line acquired in step 804 and the reference position. Under this circumstance, the division line position decision unit 205 calculates the difference from the distance to the relevant white line candidate, which is acquired in step 804, by using the white line reference position corresponding to the relevant white line candidate among the reference positions acquired respectively for the white lines on the right and left sides of the own vehicle in step 801.

Subsequently in step 806, the division line position decision unit 205 compares the difference calculated in step 805 with the value of the current minimum distance difference. As a result, if the difference is smaller than the current minimum distance difference, the processing proceeds to step 807. In step 807, the division line position decision unit 205 updates the minimum distance difference by setting the difference calculated in step 805 as the value of the minimum distance difference for either one of the right and left white lines. In the subsequent step 808, the division line position decision unit 205 updates the distance to the white line by setting the distance from the own vehicle to the relevant white line candidate, which is acquired in step 804, as the distance to either one of the right and left white lines. On the other hand, if the difference calculated in step 805 is equal to or more than the current minimum distance difference, the division line position decision unit 205 does nothing and directly proceeds to the processing on the next white line candidate.

If the processing of steps 804 to 808 has been executed on all the white line candidates which have remained without being excluded, the division line position decision unit 205 terminates the processing flow in Fig. 8 and completes the processing of step 407.

In step 407 in Fig. 4, the positions of the right and left white lines at the image capture time point of the current frame are decided by executing the above-described processing.

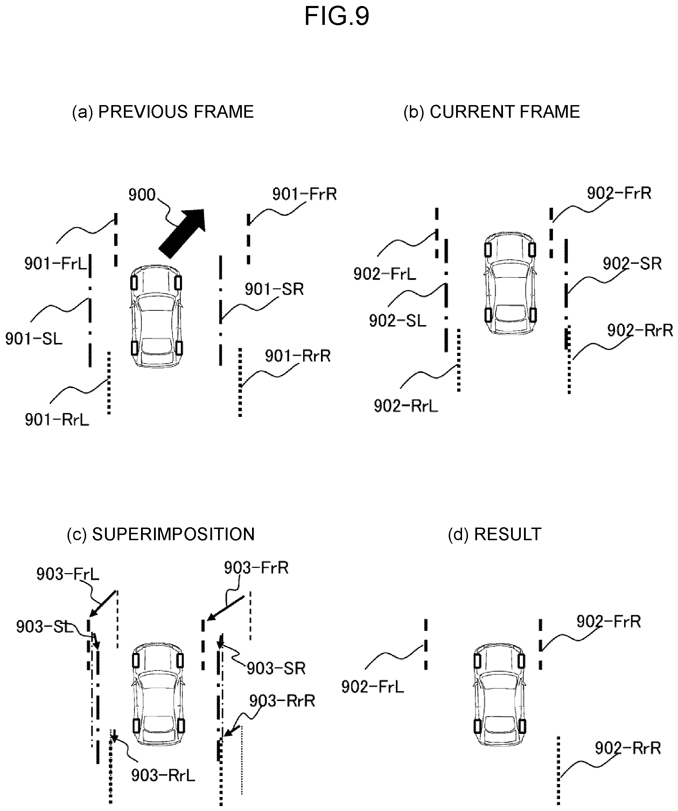

Next, a specific example of the processing for excluding an inappropriate white line candidate(s) in step 405 in Fig. 4 will be explained with reference to Fig. 9.

Fig. 9(a) illustrates an example of the positional relationship between the own vehicle and each white line candidate in the previous frame. Referring to Fig. 9(a), white line candidates 901-FrL, 901-SL, 901-RrL indicate white line candidates which are recognized respectively by the front-camera division line position estimation unit 201-Fr, the left-side-camera division line position estimation unit 201-SL, and the rear-camera division line position estimation unit 201-Rr for the division line position estimation unit 201 on the basis of images captured by the front camera 101-Fr, the left-side camera 101-SL, and the rear camera 101-Rr, respectively. These white line candidates respectively correspond to the left white line existing on the left side of the own vehicle. Furthermore, white line candidates 901-FrR, 901-SR, 901-RrR indicate white line candidates which are recognized respectively by the front-camera division line position estimation unit 201-Fr, the right-side-camera division line position estimation unit 201-SR, and the rear-camera division line position estimation unit 201-Rr for the division line position estimation unit 201 on the basis of images captured by the front camera 101-Fr, the right-side camera 101-SR, and the rear camera 101-Rr, respectively. These white line candidates respectively correspond to the right white line existing on the right side of the own vehicle. Under this circumstance, it is assumed that the own vehicle is moving to the right front as indicated with an arrow 900 in the drawing.

Fig. 9(b) illustrates an example of the positional relationship between the own vehicle and the respective white line candidates in the previous frame. Referring to Fig. 9(b), white line candidates 902-FrL, 902-SL, 902-RrL indicate white line candidates which are recognized respectively by the front-camera division line position estimation unit 201-Fr, the left-side-camera division line position estimation unit 201-SL, and the rear-camera division line position estimation unit 201-Rr for the division line position estimation unit 201 on the basis of images captured by the front camera 101-Fr, the left-side camera 101-SL, and the rear camera 101-Rr, respectively. These white line candidates respectively correspond to the left white line existing on the left side of the own vehicle. Furthermore, white line candidates 902-FrR, 902-SR, 902-RrR indicate white line candidates which are recognized respectively by the front-camera division line position estimation unit 201-Fr, the right-side-camera division line position estimation unit 201-SR, and the rear-camera division line position estimation unit 201-Rr for the division line position estimation unit 201 on the basis of images captured by the front camera 101-Fr, the right-side camera 101-SR, and the rear camera 101-Rr, respectively. These white line candidates respectively correspond to the right white line existing on the right side of the own vehicle.

Fig. 9(c) shows the positional relationship in the previous frame as illustrated in Fig. 9(a) and the positional relationship in the current frame as illustrated in Fig. 9(b) by superimposing them together with the position of the own vehicle and indicates movement directions of the respective white line candidates between them. Referring to Fig. 9(c), a movement direction 903-FrL indicates a movement direction from the white line candidate 901-FrL in the previous frame to the white line candidate 902-FrL in the current frame; a movement direction 903-SL indicates a movement direction from the white line candidate 901-SL in the previous frame to the white line candidate 902-SL in the current frame; and a movement direction 903-RrL indicates a movement direction from the white line candidate 901-RrL in the previous frame to the white line candidate 902-RrL in the current frame. Furthermore, a movement direction 903-FrR indicates a movement direction from the white line candidate 901-FrR in the previous frame to the white line candidate 902-FrR in the current frame; a movement direction 903-SR indicates a movement direction from the white line candidate 901-SR in the previous frame to the white line candidate 902-SR in the current frame; and a movement direction 903-RrR indicates a movement direction from the white line candidate 901-RrR in the previous frame to the white line candidate 902-RrR in the current frame.

Under this circumstance, the own vehicle has moved to the right front between the previous frame and the current frame as indicated with the arrow 900 in Fig. 9(a), so that the lateral movement direction of the own vehicle during this period of time is the right direction. Therefore, each white line candidate 901-FrL, 901-SL, 901-RrL corresponding to the left white line should have moved to the left direction and become away from the own vehicle; and on the other hand, each white line candidate 901-FrR, 901-SR, 901-RrR corresponding to the right white line should have moved to the left direction and become closer to the own vehicle. However, referring to Fig. 9(c), the movement direction 903-SL indicates the movement direction towards the right direction to become closer to the own vehicle. Furthermore, the movement directions 903-RrL and 903-SR indicate that the movement amount to the lateral direction is almost 0. Therefore, the white line candidates 902-SL, 902-RrL, and 902-SR after the movements indicated with these movement directions become deletion targets in step 405 in Fig. 4 and are deleted from the memory 105.

Fig. 9(d) illustrates the result of excluding the inappropriate white line candidates. Referring to Fig. 9(d), the white line candidates 902-SL, 902-RrL, and 902-SR which are determined to be inappropriate in Fig. 9(c) are deleted from the respective white line candidates 902-FrL, 902-SL, 902-RrL, 902-FrR, 902-SR, 902-RrR in the current frame as illustrated in Fig. 9(b), so that the white line candidates 902-FrL, 902-FrR, and 902-RrR remain.

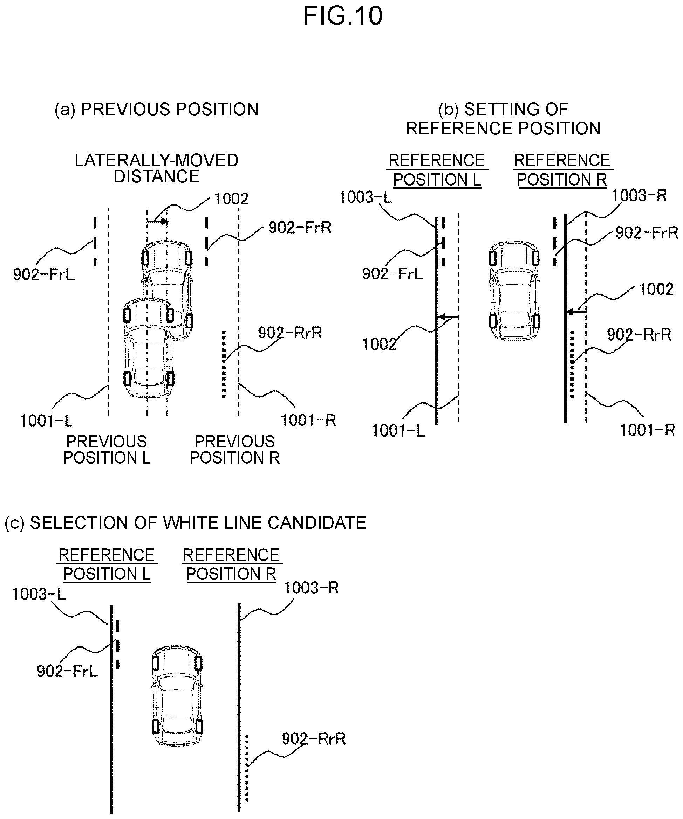

Next, an explanation will be provided with reference to Fig. 10 about a specific example of the processing for setting the white line reference position in step 406 in Fig. 4 and deciding the distance to the white line in step 407.

Fig. 10(a) illustrates an example of the positional relationship between the positions of the own vehicle in the previous frame and in the current frame and previous white line positions decided in the previous frame. Referring to Fig. 10(a), previous white line positions 1001-L, 1001-R indicate the positions of the left white line and the right white line in the previous frame, respectively; and a laterally-moved distance 1002 indicates the distance by which the own vehicle has moved in the lateral direction between the previous frame and the current frame. Incidentally, regarding the laterally-moved distance 1002, its right direction is set as positive and its left direction is set as negative. Furthermore, Fig. 10(a) shows the respective white line candidates 902-FrL, 902-FrR, and 902-RrR illustrated in Fig. 9(d) as the white line candidates which have remained after excluding the inappropriate white line candidates recognized in the current frame, by superimposing them.

Fig. 10(b) illustrates reference positions which are set for the previous white line positions 1001-L, 1001-R. Referring to Fig. 10(b), reference positions 1003-L, 1003-R are set by subtracting the laterally-moved distance 1002 from the previous white line positions 1001-L, 1001-R, respectively.

Fig. 10(c) illustrates the selection result of the white line candidates to be used to decide the distance to the white line. The white line candidates which are the closest to the reference positions 1003-L, 1003-R, respectively, among the white line candidates 902-FrL, 902-FrR, and 902-RrR illustrated in Fig. 10(b) are selected as the white line candidates to be used to decide the distance to the white line. As a result, the white line candidates 902-FrL, 902-RrR are selected as illustrated in Fig. 10(c). Then, by acquiring the distances from the own vehicle to these white line candidates, the distance from the own vehicle to each of the right and left white lines in the current frame is decided. This result will be used when setting the reference position in the next frame.

According to the above-explained first embodiment of the present invention, the division line recognition apparatus 1 decides the current positions of the white lines on the basis of the movements of the own vehicle and the position changes of the respective white line candidates along with the above-mentioned movements. Therefore, the positions of the division lines on the road can be recognized accurately.

(Second Embodiment)

Next, a second embodiment of the present invention will be explained. In this embodiment, an explanation will be provided about an example in which the positions of the division lines are decided by using the images captured by the plurality of cameras by a method different from that explained in the first embodiment. Incidentally, the hardware configuration of the division line recognition apparatus according to this embodiment is the same as that explained in the first embodiment, so that an explanation about it will be omitted below.

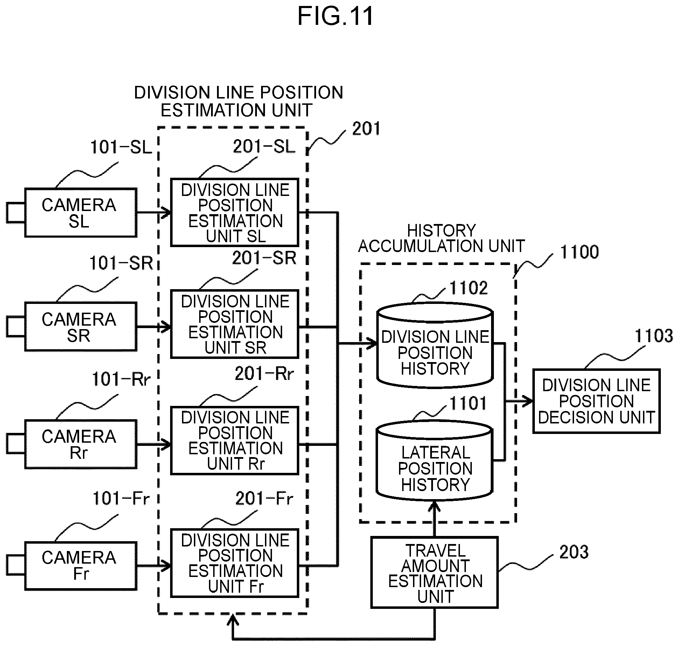

Fig. 11 is a diagram illustrating an example of a functional configuration of the division line recognition apparatus according to the second embodiment of the present invention. The division line recognition apparatus 1 according to this embodiment functionally has the division line position estimation unit 201, the travel amount estimation unit 203, a history accumulation unit 1100, and a division line position decision unit 1103 as illustrated in Fig. 2. The division line position estimation unit 201: is configured, in a manner similar to that explained in Fig. 2 in the first embodiment, of the front-camera division line position estimation unit 201-Fr, the rear-camera division line position estimation unit 201-Rr, the left-side-camera division line position estimation unit 201-SL, and the right-side-camera division line position estimation unit 201-SR which correspond to the front camera 101-Fr, the rear camera 101-Rr, the left-side camera 101-SL, and the right-side camera 101-SR, respectively; and recognizes the white line candidates from the images captured by the respective cameras 101. Furthermore, the travel amount estimation unit 203 also executes the processing similar to that explained in the first embodiment.

The history accumulation unit 1100: is a part that accumulates and retains a lateral position history 1101 and a division line position history 1102; and is implemented by, for example, the storage apparatus 103. The lateral position history 1101 is data obtained by accumulating the history of the travel amount of the own vehicle which is estimated by the travel amount estimation unit 203, that is, the history of the lateral position change amount with respect to each frame. The division line position history 1102 is data obtained by accumulating the history of the positions of the division lines which are estimated by the division line position estimation unit 201, that is, the history of the distances from the own vehicle to the respective white line candidates with respect to each frame. Incidentally, with the history accumulation unit 1100, the lateral position history 1101 and the division line position history 1102 may be stored not as separate pieces of data, but in the same table of one database.

The division line position decision unit 1103 finally decides the positions of the white lines at the image capture time point of the current frame on the basis of the lateral position history 1101 and the division line position history 1102 which are accumulated in the history accumulation unit 1100. Incidentally, the processing of the division line position decision unit 1103 in this embodiment is different from the processing of the division line position decision unit 205 explained in the first embodiment. Its details will be explained below.

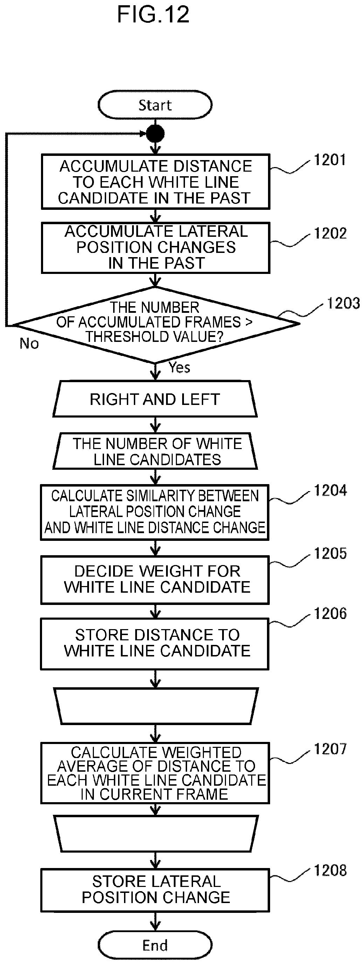

Fig. 12 is a diagram illustrating a processing flow of the division line recognition apparatus according to the second embodiment of the present invention. Firstly, in step 1201, the history of the distances from the own vehicle to the respective white line candidates which are estimated by the division line position estimation unit 201 from the images captured by the respective cameras 101 in the past is accumulated as the division line position history 1102 in the history accumulation unit 1100. In the subsequent step 1202, the history of the lateral position changes of the own vehicle in the past, which are estimated by the travel amount estimation unit 203, is accumulated as the lateral position history 1101 in the history accumulation unit 1100.

In step 1203, the number of frames regarding which the respective pieces of data have already been accumulated in steps 1201 and 1202 is compared with a preset threshold value. As a result, if the number of the data-accumulated frames is equal to or smaller than the threshold value, the processing of steps 1201 and 1202 is repeated and the accumulation of the data is continued; and if the number of the data-accumulated frames becomes equal to or larger than the threshold value, the processing proceeds to the processing in step 1204 and subsequent steps.

The division line position decision unit 1103 executes the processing of steps 1204 to 1206 with respect to each white line candidate. Firstly, in step 1204, the division line position decision unit 1103 reads the lateral position history 1101 and the division line position history 1102 from the history accumulation unit 1100 and calculates similarity between the history of the lateral position changes of the own vehicle and the history of the distance to the relevant white line candidate on the basis of these pieces of accumulated data. Under this circumstance, the similarity between them can be calculated by using a well-known method such as DP matching or normalized correlation.

Next, in step 1205, weight for the relevant white line candidate is decided on the basis of the similarity calculated in step 1204. Under this circumstance, the weight for each white line candidate is calculated so that, for example, the larger weight is set for the higher similarity. In that case, for example, a value obtained by normalizing the similarity of each white line candidate with their total sum is set as the weight for each white line candidate.

Then, in step 1206, the distance from the own vehicle to the relevant white line candidate in the current frame, which is estimated by the division line position estimation unit 201, is stored as the division line position history 1102 in the history accumulation unit 1100.

After executing the processing of steps 1204 to 1206 with respect to all the white line candidates, in step 1207, the division line position decision unit 1103 is caused to find a weighted average of the distance from the own vehicle to each white line candidate in the current frame by using a weighted value of each white line candidate which is found in step 1205. Under this circumstance, weighted average efficiency is found with respect to each of the right and left white lines by finding the weighted average of the distances to the respective white line candidates corresponding to the right and left white lines. Consequently, the positions of the right and left white lines in the current frame, that is, the distances from the own vehicle to the respective right and left white lines are respectively finally decided.

Finally, in step 1208, the lateral position change of the own vehicle which is estimated by the travel amount estimation unit 203 is stored as the lateral position history 1101 in the history accumulation unit 1100.

Incidentally, the above-explained processing illustrated in the processing flow in Fig. 12 is repeated until it is determined that the own vehicle has changed the lane. If the lane change occurs, all the data of the lateral position history 1101 and the division line position history 1102 which have been accumulated are cleared and the processing is executed again from step 1201.

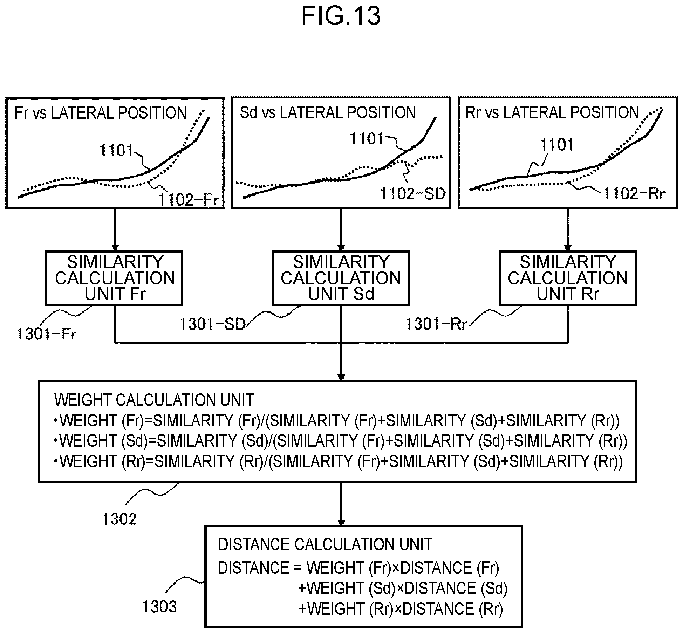

Fig. 13 is a diagram illustrating an example of a software configuration of the division line position decision unit 1103 for the division line recognition apparatus according to the second embodiment of the present invention. The division line position decision unit 1103 is configured of a similarity calculation unit 1301, a weight calculation unit 1302, and a distance calculation unit 1303 as illustrated in Fig. 13.

The similarity calculation unit 1301: is a block that calculates the similarity regarding each white line candidate from the lateral position history 1101 and the division line position history 1102; and corresponds to step 1204 in Fig. 12. Fig. 13 shows parts that calculate the similarity regarding the white line candidates existing respectively in front, side, and rear directions of the own vehicle, as separate similarity calculation units 1301-Fr, 1301-SD, and 1301-Rr. Incidentally, these are used in common for the right and left white lines.

The lateral position history 1101 and a front division line position history 1102-Fr which indicates a history of the positions of the white line candidates existing in the front direction of the own vehicle, among the division line position history 1102, are input to the similarity calculation unit 1301-Fr. The similarity calculation unit 1301-Fr calculates the similarity between these histories and outputs the calculation result to the weight calculation unit 1302.

The lateral position history 1101 and a side division line position history 1102-SD which indicates a history of the positions of the white line candidates existing in the side directions of the own vehicle, among the division line position history 1102, are input to the similarity calculation unit 1301-SD. The similarity calculation unit 1301-SD calculates the similarity between these histories and outputs the calculation result to the weight calculation unit 1302.

The lateral position history 1101 and a rear division line position history 1102-Rr which indicates a history of the positions of the white line candidates existing in the rear direction of the own vehicle, among the division line position history 1102, are input to the similarity calculation unit 1301-Rr. The similarity calculation unit 1301-Rr calculates the similarity between these histories and outputs the calculation result to the weight calculation unit 1302.

The weight calculation unit 1302: is a block that calculates the weight for each white line candidate on the basis of the similarity calculated by each of the similarity calculation units 1301-Fr, 1301-SD, 1301-Rr; and corresponds to step 1205 in Fig. 12. Incidentally, the weight calculation unit 1302 is also used in common for the right and left white lines.

The weight calculation unit 1302 calculates, for example, a weight (Fr), a weight (Sd), and a weight (Rr) which are the weights for the white line candidates existing respectively in the front, side, and rear directions of the own vehicle by using the following Expressions (1) to (3). In Expressions (1) to (3), similarity (Fr), similarity (Sd), and similarity (Rr) represent the similarity regarding the white line candidates calculated respectively by the similarity calculation units 1301-Fr, 1301-SD, 1301-Rr.

$$\text{Weight (Fr)}=\text{Similarity (Fr)}/(\text{Similarity (Fr)}+\text{Similarity (Sd)}+\text{Similarity (Rr)}) \cdots (1)$$

$$\text{Weight (Sd)}=\text{Similarity (Sd)}/(\text{Similarity (Fr)}+\text{Similarity (Sd)}+\text{Similarity (Rr)}) \cdots (2)$$

$$\text{Weight (Rr)}=\text{Similarity (Rr)}/(\text{Similarity (Fr)}+\text{Similarity (Sd)}+\text{Similarity (Rr)}) \cdots (3)$$

The distance calculation unit 1303: is a block that finally decides the distance from the own vehicle to the white line on the basis of the weight of each white line candidate found by the weight calculation unit 1302; and corresponds to step 1207 in Fig. 12. Incidentally, the distance calculation unit 1303 is also used in common for the right and left white lines.

The distance calculation unit 1303 calculates the distances from the own vehicle to the right and left white lines by using, for example, the following Expression (4). In Expression (4), the weight (Fr), the weight (Sd), and the weight (Rr) represent the weights for the respective white line candidates in the front, side, and rear directions, which are calculated by the weight calculation unit 1302. Furthermore, a distance (Fr), a distance (Sd), and a distance (Rr) represent the distances from the own vehicle to the respective white line candidates in the current frame, which are estimated by the division line position estimation unit 201.

$$\text{Distance} = \text{Weight (Fr)} \times \text{Distance (Fr)} + \text{Weight (Sd)} \times \text{Distance (Sd)} + \text{Weight (Rr)} \times \text{Distance (Rr)} \quad \cdots (4)$$

According to the above-explained second embodiment of the present invention, the division line recognition apparatus 1 decides the positions of the white lines at present by finding the weighted average of the positions of the respective white line candidates on the basis of the similarity between the history of the movements of the own vehicle and the history of the position changes of the respective white line candidates associated with the above-mentioned history. Therefore, the positions of the division lines on the road can be recognized accurately.

(Third Embodiment)

Next, a third embodiment of the present invention will be explained. In this embodiment, an explanation will be provided about a case in which a lane change judgment is made on the basis of the positions of the division lines decided by using the images captured by the plurality of cameras. Incidentally, a hardware configuration of the division line recognition apparatus according to this embodiment is the same as that explained in the first embodiment, so that an explanation about it will be omitted below.

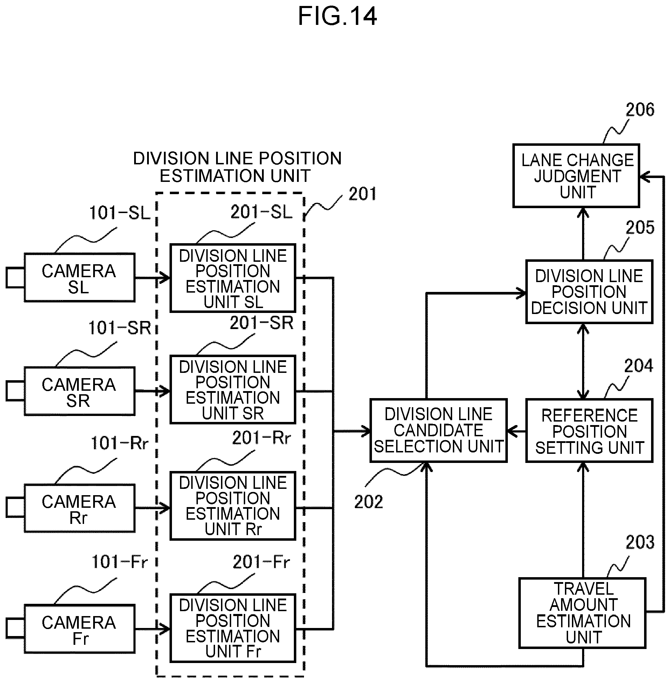

Fig. 14 is a diagram illustrating an example of a functional configuration of the division line recognition apparatus according to the third embodiment of the present invention. Referring to Fig. 14, the division line recognition apparatus 1 according to this embodiment further has a lane change judgment unit 206 in addition to the respective functional blocks of the division line position estimation unit 201, the division line candidate selection unit 202, the travel amount estimation unit 203, the reference position setting unit 204, and the division line position decision unit 205 which are explained in the first embodiment.

The lane change judgment unit 206 judges whether the own vehicle is changing the lane or not on the basis of the positions of the white lines at the image capture time point of the current frame, which are decided by the division line position decision unit 205. Generally, when changing the lane, the own vehicle moves from the current driving lane to its adjacent lane by running over either one of the right and left white lines. Under this circumstance, it is necessary to recognize not the white line over which the own vehicle has run, but the white line existing ahead of it, that is, the white line which is a boundary line for the adjacent lane which is the destination. Therefore, in this embodiment, the lane change judgment unit 206 is caused to judge whether the own vehicle is changing the lane or not, on the basis of the distances from the own vehicle to the white lines which are decided by the division line position decision unit 205.

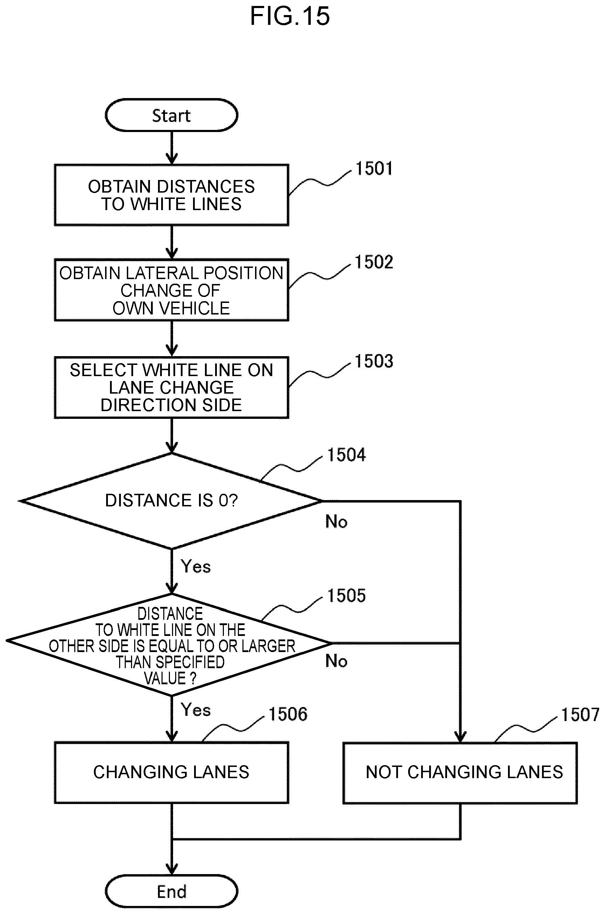

Fig. 15 is a diagram illustrating a processing flow of the lane change judgment unit 206 for the division line recognition apparatus according to the third embodiment of the present invention. Firstly, in step 1501, the lane change judgment unit 206 acquires the distances from the own vehicle to the white lines. Under this circumstance, the lane change judgment unit 206 acquires the distances to the right and left white lines, which are finally decided in step 808 in Fig. 8, from the division line position decision unit 205.

Next, in step 1502, the lane change judgment unit 206 acquires the lateral position change of the own vehicle. Under this circumstance, the lane change judgment unit 206 acquires the travel amount of the own vehicle estimated in step 401 in Fig. 4 from the travel amount estimation unit 203.

Subsequently, in step 1503, the lane change judgment unit 206 selects either one of the right and left white lines as a lane-changing-direction-side white line on the basis of the lateral position change of the own vehicle acquired in step 1502. Under this circumstance, if the own vehicle has moved to the right direction, the lane change judgment unit 206 selects the white line on the right side of the own vehicle as the lane-changing-direction-side white line; and if the own vehicle has moved to the left direction, the lane change judgment unit 206 selects the white line on the left side of the own vehicle as the lane-changing-direction-side white line.

In step 1504, the lane change judgment unit 206 judges whether the distance to the lane-changing-direction-side white line selected in step 1503, from among the distances to the right and left white lines acquired in step 1501, has become almost 0 or not. If the own vehicle runs over either the right or left white line and the relevant white line passes through the origin of the distance, for example, the front wheel axle center, the distance to the relevant white line becomes almost 0. In step 1504, whether such a condition is satisfied or not is judged; and if the condition is satisfied, the processing proceeds to step 1505; and if the condition is not satisfied, the processing proceeds to step 1507.

In step 1505, the lane change judgment unit 206 judges whether the distance to the white line existing on the other side of the lane-changing-direction-side white line selected in step 1503, from among the distances to the right and left white lines acquired in step 1501, is equal to or larger than a specified value or not. When the own vehicle runs over either the right or left white line, the white line on the opposite side of the relevant white line moves away from the own vehicle and the distance from the own vehicle to that white line on the opposite side becomes larger than a specified value, for example, the width of the own vehicle. In step 1505, whether such a condition is satisfied or not is judged; and if the condition is satisfied, the processing proceeds to step 1506; and if the condition is not satisfied, the processing proceeds to step 1507.

If the processing proceeds from step 1505 to step 1506, the lane change judgment unit 206 determines that the own vehicle is changing the lane. If the processing proceeds from step 1504 or step 1505 to step 1507, the lane change judgment unit 206 determines that the own vehicle is not changing the lane. After executing step 1506 or 1507, the processing flow in Fig. 15 is terminated.

According to the above-explained third embodiment of the present invention, the division line recognition apparatus 1 judges whether the own vehicle is changing the lane or not, on the basis of the finally decided positions of the white lines. Therefore, it is possible to: correctly judge whether the own vehicle is changing the lane or not; and change the division line which should be the object to be recognized, as appropriate, according to the judgment result.

Incidentally, the above-explained third embodiment of the present invention has described the example in which the lane change judgment unit 206 is added to the configuration of the first embodiment; however, the lane change judgment unit 206 may be added to the configuration of the second embodiment. In this case, the lane change judgment unit 206 may judge whether the own vehicle is changing the lane or not, on the basis of the positions of the white lines at the image capture time point of the current frame, which are decided by the division line position decision unit 1103.

(Fourth Embodiment)

Next, a fourth embodiment of the present invention will be explained. In this embodiment, an explanation will be provided about an example in which the positions of the division lines are decided by using the images captured by the plurality of cameras by a method different from that explained in the first embodiment. Particularly, an explanation will be provided about an embodiment in consideration of a case where a polar coordinate system is used and each of the right and left white lines is a curved line. Incidentally, a hardware configuration of the division line recognition apparatus according to this embodiment is the same as that explained in the first embodiment, so that an explanation about it will be omitted below.

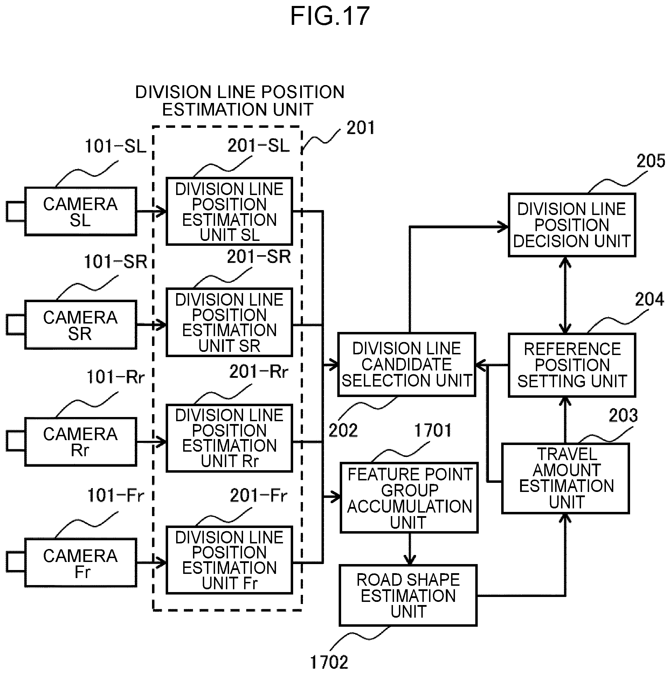

Fig. 17 is a diagram illustrating an example of a functional configuration of the division line recognition apparatus according to the fourth embodiment of the present invention. Referring to Fig. 17, the division line recognition apparatus 1 according to this embodiment further includes a feature point group accumulation unit 1701 and a road shape estimation unit 1702 in addition to the respective functional blocks of the division line position estimation unit 201, the division line candidate selection unit 202, the travel amount estimation unit 203, the reference position setting unit 204, and the division line position decision unit 205 which are explained in the first embodiment.

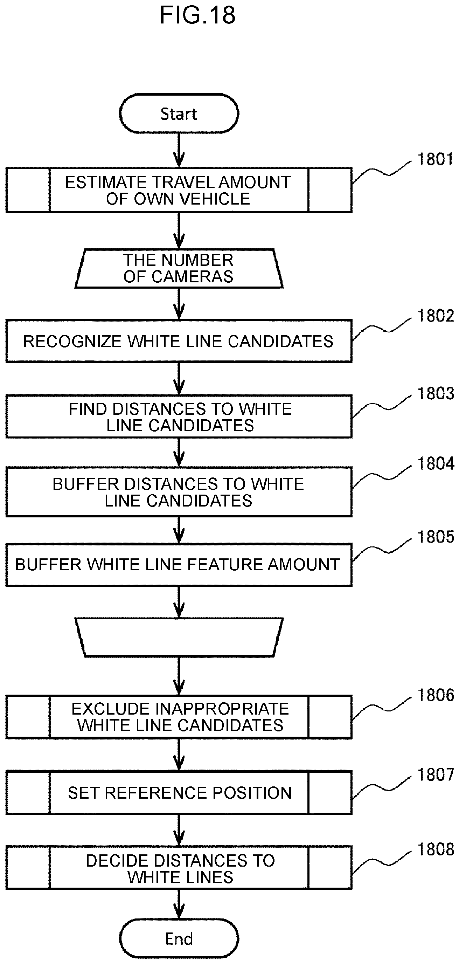

Firstly, a processing flow of the division line recognition apparatus 1 will be explained. Fig. 18 is a diagram illustrating a processing flow of the division line recognition apparatus 1 and illustrates the processing for a one-frame image. Specifically, with the division line recognition apparatus 1 according to this embodiment, every time an image(s) is input at a specified frame rate from the camera 101, the CPU 104 executes the processing for recognizing the division lines from the image in accordance with the processing flow in Fig. 18.

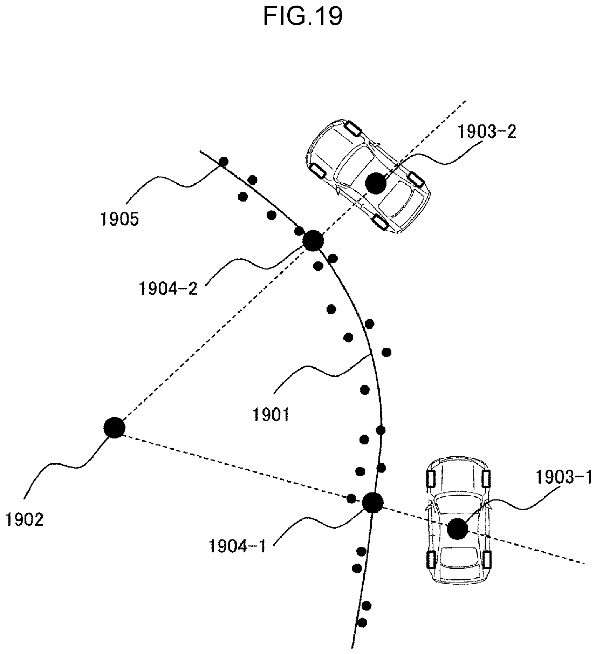

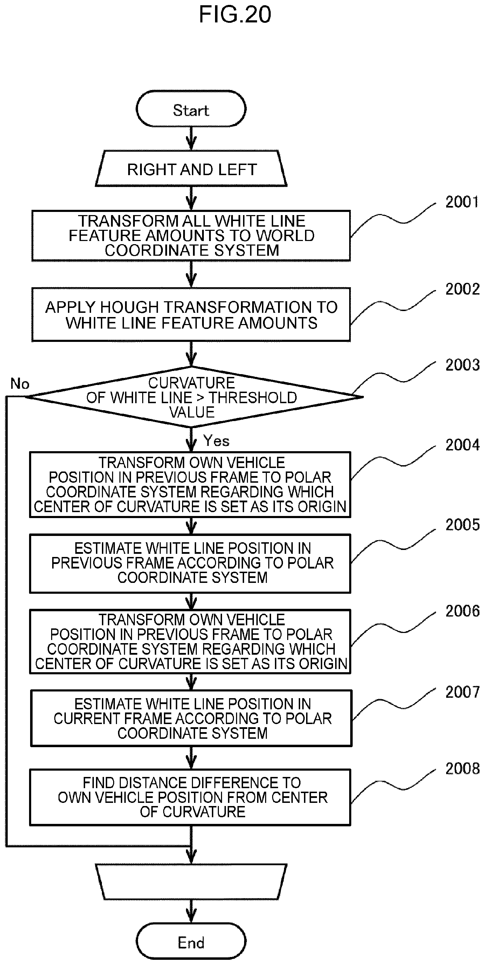

In step 1801, the travel amount estimation unit 203 is caused to estimate the travel amount of the own vehicle. Under this circumstance, the travel amount of the own vehicle from the previous processing is estimated on the basis of the information such as the position, speed, and traveling direction of the own vehicle, which are input from the vehicle control unit 108 as described earlier. In step 1801, the travel amount estimated by the travel amount estimation unit 203 is stored in the memory 105. This processing will be described later by using Fig. 19 and Fig. 20.

Since steps 1802 to 1804 are the same processing as that of steps 402 to 404 in Fig. 4, an explanation about them is omitted here. Step 1805 is processing executed by the feature point group accumulation unit 1701 to buffer feature amounts extracted when recognizing the white line candidates. Under this circumstance, only the feature amounts which constitute the white line candidates are buffered.

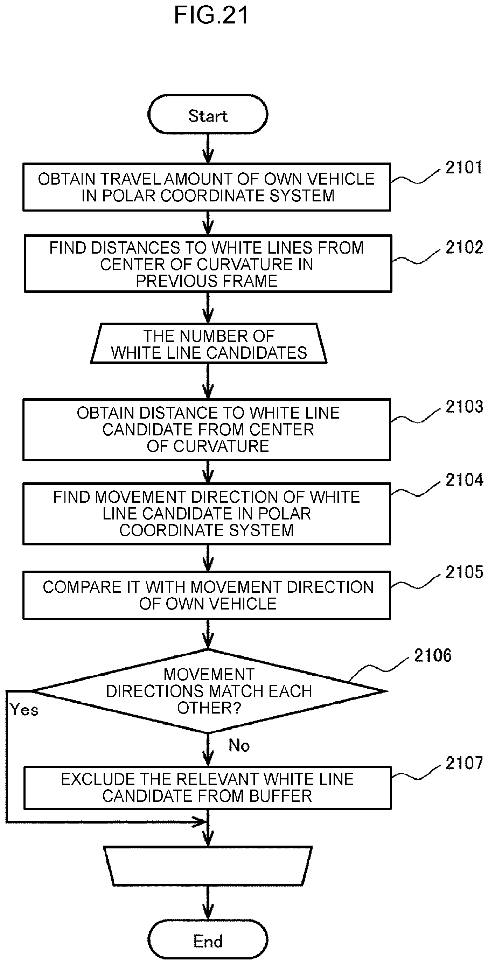

If the processing of steps 1802 to 1805 has been terminated with respect to each camera 101, the processing of steps 1806 to 1808 is subsequently executed. Firstly, in step 1806, the division line candidate selection unit 202 is caused to exclude an inappropriate white line candidate(s) from among the white line candidates recognized by the processing of steps 1802 to 1805. This processing is to select a white line candidate which should be a target of the subsequent processing, by excluding any white line candidate(s) which is not consistent with the position change of the own vehicle as described earlier. Incidentally, the details of the processing of step 1806 will be explained later with reference to the processing flow in Fig. 21.

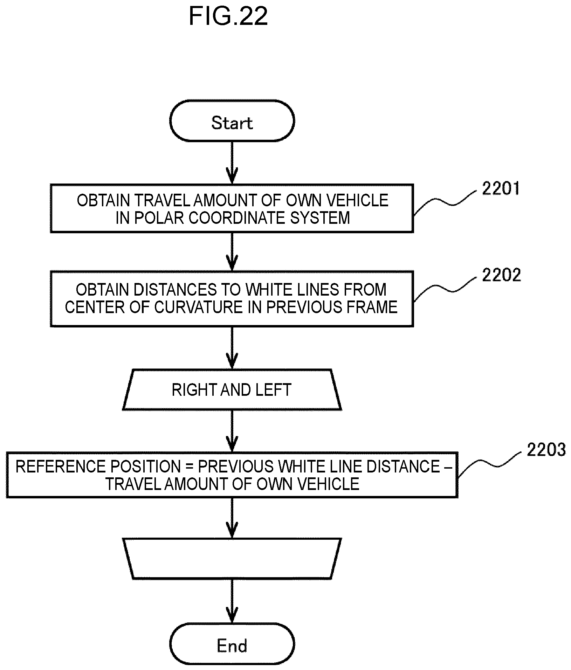

Next, in step 1807, the reference position setting unit 204 is caused to set the white line reference position at the image capture time point of the current frame. This processing is processing as described earlier for setting, as the white line reference position, the position regarding which there is a high possibility that the white line may exist at the image capture time point of the current frame. Incidentally, the details of the processing of step 1807 will be explained later with reference to the processing flow in Fig. 22.

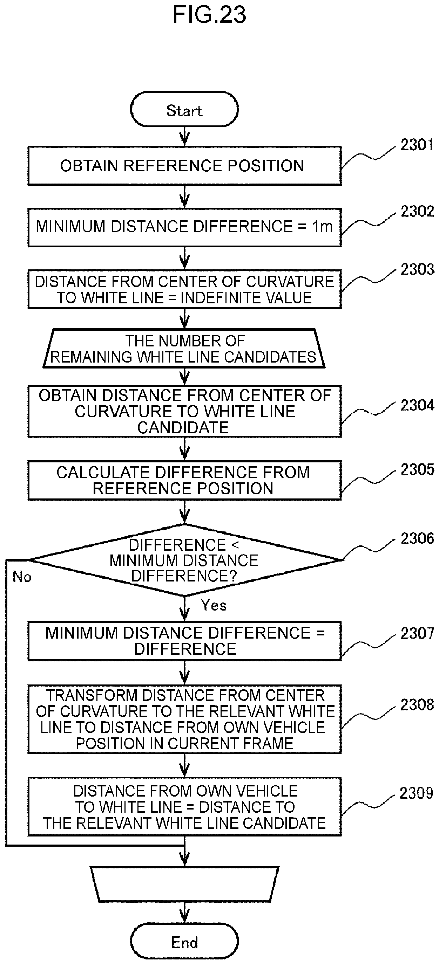

Finally, in step 1808, the division line position decision unit 205 is caused to decide the distance from the own vehicle to the white line as the position of the white line at the image capture time point of the current frame. This processing is processing to: compare the distance to each white line candidate, which remains after excluding the inappropriate white line candidate(s) in step 1806, with the reference position which is set in step 1807; and finally decide the position of the white line at the image capture time point of the current frame on the basis of the comparison result. Incidentally, the details of the processing of step 1808 will be explained later with reference to the processing flow in Fig. 23.

Fig. 19 is a diagram regarding data used for processing for dealing with the curved lines. A point group 1905 is a feature amount buffered in step 1805. An arc 1901 indicates the shape of a white line estimated by using this point group 1905 and a point 1902 is its center of curvature. A point 1903-1 is the vehicle position in the previous frame and a point 1903-2 is the vehicle position in the current frame. A point 1904-1 is an intersection point between a straight line connecting the point 1902 and the point 1903-1, and the arc 1901. Similarly, a point 1904-2 is an intersection point between a straight line connecting the point 1902 and the point 1904-1, and the arc 1901.

Fig. 20 is a flow of processing for estimating the position change of the own vehicle in step 1801. This processing is executed with respect to each of the white lines on the right and left sides of the own vehicle.

Firstly, in step 2001, all the white line feature amounts are transformed to the world coordinate system. For example, when executing the processing with respect to the white line on the left side of the own vehicle, the feature amounts relating to the white line on the left side from among the feature amounts acquired by 101-Rr and 101-Fr and the feature amounts acquired by the camera 101-SL are transformed.

Next, in step 2002, the road shape estimation unit 1702 is caused to apply the Hough transformation to the point group 1905 and find an approximate curve. This corresponds to processing for finding the arc 1901. Consequently, it becomes possible to find the shape of the white line and the center of curvature. Incidentally, the Hough transformation is an algorithm which is already generally widely used, so that an explanation about it is omitted here. Subsequently, in step 2003, the road shape estimation unit 1702 is caused to judge the curvature of the relevant white line. By doing so, whether the white line is of a shape close to a straight line or a curve is judged. Then, if the curvature is larger than a threshold value, it is determined that the shape of the white line is a curve, and the processing proceeds to step 2004 and subsequent steps.

In step 2004, the own vehicle position in the previous frame is transformed to the polar coordinate system whose origin is the point 1902 which is the center of curvature. Next, in step 2005, the white line position in the previous frame is estimated with the polar coordinate system. In other words, this corresponds to finding the coordinates of the point 1904-1 with the polar coordinate system.

Next, in step 2006, the own vehicle position in the current frame is transformed to the polar coordinate system whose origin is the point 1902 which is the center of curvature. Then, in step 2007, the white line position in the current frame is estimated with the polar coordinate system. In other words, this corresponds to finding the coordinates of the point 1904-2 with the polar coordinate system.

Finally, in step 2008, the difference in the distance from the point 1902, which is the center of curvature, to the own vehicle position is found. This corresponds to finding the difference between the distance between the point 1903-1 and the point 1904-1 and the distance between the point 1903-2 and the point 1904-2. For example, if the relevant difference increases from the previous frame to the current frame, this means that the own vehicle is running in a direction to move away from the white line; and if the relevant difference decreases, this means that the own vehicle is running in a direction to come closer to the white line.

Fig. 21 is a diagram illustrating a processing flow when excluding an inappropriate white line candidate(s) in step 1806. Firstly, in step 2101, the division line candidate selection unit 202 acquires the travel amount of the own vehicle which is estimated by the travel amount estimation unit 203 in step 401. This is the distance difference found in step 2008. Incidentally, the estimation result of the lateral position change amount of the own vehicle by the travel amount estimation unit 203 is stored in, for example, the memory 105 for the division line recognition apparatus 1. The division line candidate selection unit 202 executes the processing of step 2101 by reading this from the memory 105.

Next, in step 2102, the division line candidate selection unit 202 acquires the positions of the white lines with reference to the position of the own vehicle in the previous frame, that is, the distances from the own vehicle to the respective right and left white lines. Under this circumstance, the division line candidate selection unit 202 reads data of the distances, which are respectively decided in step 1808 with respect to the white lines on the right and left sides of the own vehicle in the previous processing and are stored in the memory 105, from the memory 105.

The division line candidate selection unit 202 executes the processing of each of steps 2103 to 2107 with respect to each white line candidate regarding which the distance from the own vehicle is acquired in step 1803. In step 2103, the division line candidate selection unit 202 acquires the distance from the center of the curvature from the own vehicle to the relevant white line candidate. The calculation method is similar to that in step 2102.

In step 2104, the division line candidate selection unit 202 finds a movement direction of the relevant white line candidate with reference to the center of curvature. Under this circumstance, the division line candidate selection unit 202 finds the position change of the relevant white line, that is, whether the relevant white line candidate has moved away from or come closer to its position relative to the own vehicle in the previous frame by comparing the distance to the relevant white line candidate in the current frame, which is acquired in step 2103 of the current processing, with the distance to the relevant white line candidate in the previous frame which is acquired in step 2103 of the previous processing.

In step 2105, the division line candidate selection unit 202 compares the movement direction of the own vehicle indicated by the travel amount of the own vehicle acquired in step 2101 with the movement direction of the relevant white line candidate which is found in step 604.

In step 2106, the division line candidate selection unit 202 judges whether the movement direction of the relevant white line candidate matches the movement direction of the own vehicle or not, on the basis of the comparison result in step 2105. Under this circumstance, if the movement direction of the relevant white line candidate is an opposite direction of the movement direction of the own vehicle, the division line candidate selection unit 202 determines that these movement directions match each other. In that case, the division line candidate selection unit 202 does nothing and directly proceeds to the processing on the next white line candidate. On the other hand, if the lateral movement direction of the own vehicle and the lateral movement direction of the relevant white line candidate are the same direction, or if the movement of the relevant white line candidate is 0 when the movement of the own vehicle is not 0, the division line candidate selection unit 202 determines that these movement directions do not match each other. In that case, the division line candidate selection unit 202: excludes the relevant white line candidate from targets of the subsequent processing by proceeding to step 2107 and deleting the data of the relevant white line candidate from the memory 105; and then proceeds to the processing on the next white line candidate.

If the processing of steps 2103 to 2107 has been executed on all the white line candidates, the division line candidate selection unit 202 terminates the processing flow in Fig. 21 and completes the processing of step 1806.

Fig. 22 is a diagram illustrating a processing flow when setting the white line reference position in step 1807. Firstly, in step 2201, the reference position setting unit 204 acquires the travel amount of the own vehicle which is estimated by the travel amount estimation unit 203. Under this circumstance, the reference position setting unit 204 reads the estimation result of the travel amount of the own vehicle, which is performed by the travel amount estimation unit 203 in step 1801, from the memory 105 in the same manner as in step 2101 described earlier.

Next, in step 2202, the reference position setting unit 204 acquires the position of the white line with reference to the position of the center of curvature in the previous frame, that is, the distance from the center of curvature to each of the right and left white lines. Under this circumstance, in the same manner as in step 2102 described earlier, the data of the distances, which were decided in step 1808 with respect to the white lines on the right and left sides of the own vehicle, respectively, in the previous processing and are stored in the memory 105, are read from the memory 105.

Finally, in step 2203, the reference position setting unit 204 calculates the reference position with respect to each of the right and left white lines. Under this circumstance, the reference position setting unit 204 calculates the reference position for each of the white line existing on the left side of the own vehicle and the white line existing on the right side of the own vehicle by adding or subtracting the travel amount of the own vehicle, which is acquired in step 2201, to or from the distance from the center of curvature to the relevant white line in the previous frame which is acquired in step 2202. The calculation results of the reference positions are stored in the memory 105.

If the processing of step 2203 has been executed with respect to both the right and left white lines, the reference position setting unit 204 terminates the processing flow in Fig. 18 and completes the processing of step 1807.

In step 1807 in Fig. 18, by executing the above-described processing, the position regarding which there is a high possibility that a white line may exist at the image capture time point of the current frame is set as the white line reference position with respect to each of the right and left sides of the own vehicle.

Fig. 23 is a diagram illustrating a processing flow when deciding the distance from the own vehicle to the white line in step 1808. Firstly, in step 2301, the division line position decision unit 205 acquires the reference positions which are set by the reference position setting unit 204. Under this circumstance, the reference positions which are respectively set to the right and left white lines by the reference position setting unit 204 by executing step 1807 are read from the memory 105.

Next, in step 2302, the division line position decision unit 205 sets a minimum distance difference to an initial value which is 1 m. This minimum distance difference is used as a variable in the subsequent processing. Incidentally, in step 2302, an arbitrary value can be set as the initial value of the minimum distance difference; however, it is desirable to set a realistic distance for the own vehicle to move between the frames. In this embodiment, the initial value of the minimum distance difference is set as 1 m.

Then in step 2303, the division line position decision unit 205 sets an indefinite value as an initial value of the distance to the relevant white line with respect to each of the right and left white lines. The value of this indefinite value may be an arbitrary value; however, it is desirable to set the distance which cannot happen in normal driving.

Incidentally, each processing of the above-described steps 2302 and 2303 is initialization of the minimum distance difference and the distances to the white lines from the center of curvature, which are variables. The values of these variables are sequentially updated by the subsequent processing of steps 2304 to 2308.

The division line position decision unit 205 executes the processing of each of steps 2304 to 2308 with respect to each white line candidate which has remained without being excluded in step 1806, from among the white line candidates regarding which the distances from the center of curvature are acquired in step 1803. Incidentally, the right and left white lines are distinguished from each other in the processing of steps 2304 to 2308 explained below. Specifically, the minimum distance difference and the distance to the white line are updated on the basis of the result of the comparison with the reference position with respect to the white line on the side corresponding to the relevant white line candidate among the white lines existing on the right and left sides of the own vehicle.

In step 2304, the division line position decision unit 205 acquires the distance from the center of curvature to the relevant white line candidate. Under this circumstance, the data stored in step 1805 is read from the memory 105.

Next, in step 2305, the division line position decision unit 205 calculates the difference between the distance to the relevant white line acquired in step 2304 and the reference position. Under this circumstance, the division line position decision unit 205 calculates the difference from the distance to the relevant white line candidate, which is acquired in step 2304, by using the white line reference position corresponding to the relevant white line candidate among the reference positions acquired respectively for the white lines on the right and left sides of the own vehicle in step 2301.

Subsequently in step 2306, the division line position decision unit 205 compares the difference calculated in step 2305 with the value of the current minimum distance difference. As a result, if the difference is smaller than the current minimum distance difference, the processing proceeds to step 2307. In step 2307, the division line position decision unit 205 updates the minimum distance difference by setting the difference calculated in step 2305 as the value of the minimum distance difference for either one of the right and left white lines. Next, in step 2308, the division line position decision unit 205 transforms the distance from the center of curvature to the relevant white line candidate to the distance from the own vehicle position in the current frame. In the subsequent step 2309, the division line position decision unit 205 updates the distance to the white line by setting the distance from the own vehicle to the relevant white line candidate, which is acquired in step 2304, as the distance to either one of the right and left white lines. On the other hand, if the difference calculated in step 2305 is equal to or more than the current minimum distance difference, the division line position decision unit 205 does nothing and directly proceeds to the processing on the next white line candidate.

If the processing of steps 2304 to 2309 has been executed on all the white line candidates which have remained without being excluded, the division line position decision unit 205 terminates the processing flow in Fig. 23 and completes the processing of step 1808.

In step 1808 in Fig. 18, the positions of the right and left white lines at the image capture time point of the current frame are decided by executing the above-described processing.

Incidentally, the lane change judgment unit 206 explained earlier according to the third embodiment of the present invention may be added to the configuration of the fourth embodiment. In this case, the lane change judgment unit 206 may judge whether the own vehicle is changing the lane or not, on the basis of the positions of the white lines at the image capture time point of the current frame, which are decided by the division line position decision unit 205.

(Data Structure of White Line Recognition Results)

Next, an explanation will be provided about a data structure of the white line recognition results obtained by the division line recognition apparatus according the respective first to fourth embodiments explained above. Fig. 16 is a diagram illustrating an example of the data structure of a database storing the white line recognition results. The data structure illustrated in Fig. 16 is configured by including the number of cumulative frames 1601 and frame information 1602.

The number of cumulative frames 1601 is a field indicating the number of frames in which the data are accumulated; and the frame information 1602 is stored as many as this number of frames.

The frame information 1602 is configured of a laterally-moved distance 1603, a final white line distance 1604, the number of white line candidates 1605, and white line candidate information 1606. The laterally-moved distance 1603 indicates the laterally-moved distance of the own vehicle in the relevant frame and this corresponds to the lateral position history 1101 in Fig. 11 which is explained in the second embodiment. The final white line distance 1604 indicates the distances to the white lines, which are finally decided by the division line position decision unit 205 (the first embodiment) or the division line position decision unit 1103 (the second embodiment). The number of white line candidates 1605 indicates the number of the white line candidates recognized by the division line position estimation unit 201 from the images captured by the respective cameras 101 and the white line candidate information 1606 as many as this number of the white line candidates is stored. Incidentally, in each of the first to fourth embodiments, the maximum number of the white line candidates indicated by the number of white line candidates 1605 is six corresponding to six white line candidates 301-FrL, 301-SL, 301-RrL, 301-FrR, 301-SR, and 301-RrR illustrated in Fig. 3.

The white line candidate information 1606 is configured of a white line candidate position 1607 and a white line candidate distance 1608. The white line candidate position 1607: indicates the positional relationship between the own vehicle and the relevant white line candidate; and stores an identifier indicating any one of the front left, the side left, the rear left, the front right, the side right, and the rear right. The white line candidate distance 1608 indicates the distance to the relevant white line candidate and corresponds to the division line position history 1102 in Fig. 11 which is explained in the second embodiment.

Incidentally, regarding the above-explained data structure, the lateral position history 1101 and the division line position history 1102 which are accumulated in the history accumulation unit 1100 in the second embodiment are included in the database of the white line recognition results; however, they may be stored as a separate database. Furthermore, the data structure illustrated in Fig. 16 is merely an example and another data structure may be adopted.

According to the above-explained embodiments of the present invention, the following operational advantages are obtained.

(1) The division line recognition apparatus 1 is an apparatus for recognizing division lines on the road from a plurality of images captured respectively by the plurality of cameras 101 mounted in the own vehicle. The division line recognition apparatus 1 includes: the travel amount estimation unit 203 that estimates the travel amount of the own vehicle; the division line position estimation unit 201 that estimates the position with reference to the position of the own vehicle with respect to a plurality of white line candidates which are respectively recognized as candidates for the division lines from the plurality of images; and the division line position decision unit 205 that decides the positions of the white lines at present on the basis of the travel amount of the own vehicle which is estimated by the travel amount estimation unit 203 and the history of the positions of the white line candidates estimated by the division line position estimation unit 201. Consequently, the positions of the division lines on the road can be recognized accurately.

(2) According to the first embodiment, the division line recognition apparatus 1 includes the reference position setting unit 204 and the division line candidate selection unit 202. The reference position setting unit 204 sets the white line reference position on the basis of the travel amount of the own vehicle, which is estimated by the travel amount estimation unit 203, and the positions of the division lines decided by the division line position decision unit 205 in the past, that is, the white line positions at the image capture time point of the previous frame. The division line candidate selection unit 202 selects at least any one of the plurality of the white line candidates on the basis of the travel amount of the own vehicle, which is estimated by the travel amount estimation unit 203, and the position changes of the white line candidates which are estimated by the division line position estimation unit 201. The division line position decision unit 205 decides the positions of the white lines at present on the basis of the position of the white line candidate(s) selected by the division line candidate selection unit 202 and the reference position which is set by the reference position setting unit 204. Consequently, the white line position(s) at present can be decided accurately by selecting an appropriate white line candidate(s) from the plurality of white line candidates recognized by using the plurality of cameras in consideration of the movements of the own vehicle.

(3) According to the second embodiment, the division line recognition apparatus 1 includes the history accumulation unit 1100. The history accumulation unit 1100 accumulates: the lateral position history 1101 that is the history of the travel amount of the own vehicle which is estimated by the travel amount estimation unit 203; the division line position history 1102 that is the history of the positions of the white line candidates estimated by the division line position estimation unit 201. The division line position decision unit 1103: calculates the similarity between the lateral position history 1101 and the division line position history 1102 which are accumulated in the history accumulation unit 1100 (step 1204); calculates the weight for each white line candidate on the basis of the calculated similarity (step 1205); and calculates the weighted average efficiency by obtaining the weighted average of the positions of the plurality of white line candidates on the basis of the calculated weight and decides the positions of the white lines at present on the basis of the calculated weighted average efficiency (step 1207). Consequently, the white line positions at present can be decided accurately from the history of the positions of the plurality of white line candidates recognized by using the plurality of cameras.

(4) According to the third embodiment, the division line recognition apparatus 1 includes the lane change judgment unit 206 that judges whether the own vehicle is changing the lane or not, on the basis of the positions of the white lines which are decided by the division line position decision unit 205. Consequently, whether the own vehicle is changing the lane or not can be judged accurately by using the decided current white line positions.

(5) According to the fourth embodiment, the division line recognition apparatus 1 includes the reference position setting unit 204 and the division line candidate selection unit 202. The reference position setting unit 204 sets the white line reference position on the basis of the travel amount of the own vehicle which is estimated by the travel amount estimation unit 203 and the positions of the division lines decided by the division line position decision unit 205 in the past, that is, the white line positions at the image capture time point of the previous frame. The division line candidate selection unit 202 selects at least any one of the plurality of white line candidates on the basis of the travel amount of the own vehicle which is estimated by the travel amount estimation unit 203, and the position changes of the white line candidates which are estimated by the division line position estimation unit 201. The division line position decision unit 205 decides the positions of the white lines at present on the basis of the position(s) of the white line candidate(s) selected by the division line candidate selection unit 202 and the reference position which is set by the reference position setting unit 204. Consequently, the white line positions at present can be decided accurately by selecting an appropriate white line candidate from the plurality of white line candidates recognized by using the plurality of cameras in consideration of the movements of the own vehicle.

Incidentally, the above-explained embodiments have been described by taking an example of the division line recognition apparatus 1 which is mounted in the vehicle; however, the present invention is not limited to this example. For example, the present invention can be also applied to a case where a plurality of images captured respectively by a plurality of cameras mounted in a vehicle are transmitted to a server and these images are received by the server to recognize division lines on the road. In this case, the server which is not mounted in the vehicle functions as the division line recognition apparatus according to the present invention. Besides this, the present invention can be implemented in an arbitrary mode.

Furthermore, in the above-explained embodiments, the functions of the division line recognition apparatus 1 are implemented by execution of the programs by the CPU 104; however, the present invention is not limited to this example. For example, some or all of the functions of the division line recognition apparatus 1 may be implemented by using an FPGA (Field-Programmable Gate Array). Besides this, an arbitrary hardware configuration can implement the division line recognition apparatus according to the present invention.

The above-described embodiments and various kinds of variations are just examples. The present invention is not limited to the aforementioned embodiments unless the features of the invention are impaired; and other aspects which can be thought of within the scope of the technical idea of the present invention are also included within the scope of the present invention.

The disclosure content of the following basic priority application is incorporated herein by reference: Japanese Patent Application No. 2018-179483 (filed on September 25, 2018)

REFERENCE SIGNS LIST

| | |
|---|---|
| 1: | division line recognition apparatus |
| 101: | cameras |
| 103: | storage apparatus |
| 104: | CPU |
| 105: | memory |
| 106: | CAN I/F |
| 107: | CAN bus |
| 108: | vehicle control unit |
| 201: | division line position estimation unit |
| 202: | division line candidate selection unit |
| 203: | travel amount estimation unit |
| 204: | reference position setting unit |
| 205: | division line position decision unit |
| 206: | lane change judgment unit |
| 1100: | history accumulation unit |
| 1101: | lateral position history |
| 1102: | division line position history |
| 1103: | division line position decision unit |

**Claims**

1. A division line recognition apparatus for identifying a position of a division line on a road from a plurality of images captured with passage of time by a plurality of cameras mounted in a vehicle,
   the division line recognition apparatus comprising:

a travel amount estimation unit that estimates a travel amount of the vehicle with the passage of time;
a division line position estimation unit that estimates positions of white line candidates indicating division lines with reference to a position of the vehicle from each of the images captured by the plurality of cameras:

a division line candidate selection unit that selects at least one of the plurality of white line candidates on the basis of the travel amount of the vehicle with the passage of time, which is estimated by the travel amount estimation unit, and changes with the passage of time in the positions of the white line candidates which are estimated by the division line position estimation unit;
a division line position decision unit that decides a position of a division line at present from the white line candidate selected by the division line candidate selection unit; and
a reference position setting unit that sets a reference position for the division line on the basis of the travel amount of the vehicle, which is estimated by the travel amount estimation unit, and the position of the division line decided by the division line position decision unit before the passage of time,
wherein the division line position decision unit decides the white line candidate which is closest to the reference position, which is set by the reference position setting unit, as the position of the division line at present.

2. The division line recognition apparatus according to claim 1, further comprising:

a feature point group accumulation unit that accumulates a feature point group extracted from the images captured by at least one camera; and
a road shape estimation unit that estimates a shape of a road where the vehicle runs, by using the feature point group accumulated by the feature point group accumulation unit,
wherein if the shape of the road estimated by the road shape estimation unit has a specified curvature, the travel amount estimation unit estimates the travel amount of the vehicle with reference to a center of the curvature.

3. A division line recognition apparatus for identifying a position of a division line on a road from a plurality of images captured with passage of time by a plurality of cameras mounted in a vehicle,
the division line recognition apparatus comprising:

a travel amount estimation unit that estimates a travel amount of the vehicle with the passage of time;
a division line position estimation unit that estimates positions of white line candidates indicating division lines with reference to a position of the vehicle from each of the images captured by the plurality of cameras:

a history accumulation unit that accumulates a history of the travel amount of the vehicle, which is estimated by the travel amount estimation unit, and a history of the positions of the white line candidates which are estimated by the division line position estimation unit; and
a division line position decision unit that:

calculates similarity between the history of the travel amount of the vehicle and the history of the positions of the white line candidates, which are accumulated in the history accumulation unit;
calculates weight for the white line candidates on the basis of the calculated similarity; and
calculates weighted average efficiency by weight-averaging the positions of the plurality of white line candidates on the basis of the calculated weight; and

decides the position of the division line at present on the basis of the calculated weighted average efficiency.

4. The division line recognition apparatus according to any one of claims 1 to 3, comprising a lane change judgment unit that judges whether the vehicle is changing a lane or not, on the basis of the position of the division line which is decided by the division line position decision unit.

# FIG.1

# FIG.2

DIVISION LINE POSITION
ESTIMATION UNIT

201

101-SL

CAMERA
SL

201-SL

DIVISION LINE
POSITION
ESTIMATION
UNIT SL

101-SR

CAMERA
SR

201-SR

DIVISION LINE
POSITION
ESTIMATION
UNIT SR

101-Rr

CAMERA
Rr

201-Rr

DIVISION LINE
POSITION
ESTIMATION
UNIT Rr

101-Fr

CAMERA
Fr

201-Fr

DIVISION LINE
POSITION
ESTIMATION
UNIT Fr

202

DIVISION
LINE
CANDIDATE
SELECTION
UNIT

205

DIVISION LINE
POSITION
DECISION UNIT

204

REFERENCE
POSITION
SETTING UNIT

203

TRAVEL
AMOUNT
ESTIMATION
UNIT

# FIG.3

# FIG.4

```
                    ┌─────────┐
                    │  Start  │
                    └────┬────┘
                         │
                         ▼
        ┌────────────────────────────────┐
        │ ESTIMATE LATERAL POSITION CHANGE│ ─── 401
        │        OF OWN VEHICLE          │
        └────────────────┬───────────────┘
                         │
                         ▼
              ╱────────────────────╲
             ╱   THE NUMBER OF       ╲
             ╲     CAMERAS           ╱
              ╲────────────────────╱
                         │
                         ▼
        ┌────────────────────────────────┐
        │  RECOGNIZE WHITE LINE CANDIDATES│ ─── 402
        └────────────────┬───────────────┘
                         │
                         ▼
        ┌────────────────────────────────┐
        │       FIND DISTANCES TO        │ ─── 403
        │     WHITE LINE CANDIDATES      │
        └────────────────┬───────────────┘
                         │
                         ▼
        ┌────────────────────────────────┐
        │      BUFFER DISTANCES TO        │ ─── 404
        │     WHITE LINE CANDIDATES      │
        └────────────────┬───────────────┘
                         │
                         ▼
              ╱────────────────────╲
             ╱                       ╲
             ╲                       ╱
              ╲────────────────────╱
                         │
                         ▼
        ┌──┬──────────────────────────┬──┐
        │  │  EXCLUDE INAPPROPRIATE    │  │ ─── 405
        │  │   WHITE LINE CANDIDATES   │  │
        └──┴──────────────┬───────────┴──┘
                         │
                         ▼
        ┌──┬──────────────────────────┬──┐
        │  │    SET REFERENCE POSITION │  │ ─── 406
        └──┴──────────────┬───────────┴──┘
                         │
                         ▼
        ┌──┬──────────────────────────┬──┐
        │  │    DECIDE DISTANCES TO    │  │ ─── 407
        │  │       WHITE LINES         │  │
        └──┴──────────────┬───────────┴──┘
                         │
                         ▼
                    ┌─────────┐
                    │   End   │
                    └─────────┘
```

# FIG.5

501-L

501-R

# FIG.6

```
        ┌─────────┐
        │  Start  │
        └─────────┘
             │
             ▼
┌──────────────────────────────┐
│ OBTAIN LATERAL POSITION CHANGE│──── 601
│        OF OWN VEHICLE         │
└──────────────────────────────┘
             │
             ▼
┌──────────────────────────────┐
│  OBTAIN DISTANCES TO WHITE LINES│──── 602
│        IN PREVIOUS FRAME      │
└──────────────────────────────┘
             │
             ▼
    ╱─────────────────────╲
    │  THE NUMBER OF WHITE │
    │    LINE CANDIDATES   │
    ╲─────────────────────╱
             │
             ▼
┌──────────────────────────────┐
│    OBTAIN DISTANCES TO WHITE  │──── 603
│        LINE CANDIDATES        │
└──────────────────────────────┘
             │
             ▼
┌──────────────────────────────┐
│ FIND LATERAL MOVEMENT DIRECTION│──── 604
│      OF WHITE LINE CANDIDATES │
└──────────────────────────────┘
             │
             ▼
┌──────────────────────────────┐
│ COMPARE IT WITH LATERAL MOVEMENT│──── 605
│     DIRECTION OF OWN VEHICLE  │
└──────────────────────────────┘
             │
             ▼
        ╱─────────╲
       ╱ MOVEMENT  ╲──── 606
  Yes │ DIRECTIONS MATCH │
       ╲ EACH OTHER? ╱
        ╲─────────╱
             │ No
             ▼
┌──────────────────────────────┐
│ EXCLUDE THE RELEVANT WHITE LINE│──── 607
│    CANDIDATE FROM BUFFER      │
└──────────────────────────────┘
             │
             ▼
    ╱─────────────────╲
    │                  │
    ╲─────────────────╱
             │
             ▼
        ┌─────────┐
        │   End   │
        └─────────┘
```

# FIG.7

Start

OBTAIN LATERAL POSITION CHANGE
OF DRIVER'S OWN VEHICLE — 701

OBTAIN DISTANCES TO WHITE LINES
IN PREVIOUS FRAME — 702

RIGHT AND LEFT

REFERENCE POSITION =
PREVIOUS WHITE LINE DISTANCE - LATERAL POSITION
CHANGE OF OWN VEHICLE — 703

End

# FIG.8

```
                    ┌─────────────┐
                    │    Start     │
                    └──────┬──────┘
                           ▼
        ┌──────────────────────────────────┐      801
        │   OBTAIN REFERENCE POSITION        │
        └──────────────┬───────────────────┘
                       ▼
        ┌──────────────────────────────────┐      802
        │  MINIMUM DISTANCE DIFFERENCE = 1m  │
        └──────────────┬───────────────────┘
                       ▼
        ┌──────────────────────────────────┐      803
        │     DISTANCE TO WHITE LINE =       │
        │        INDEFINITE VALUE            │
        └──────────────┬───────────────────┘
                       ▼
      ╱────────────────────────────────────╲
      │   THE NUMBER OF REMAINING            │
      │   WHITE LINE CANDIDATES              │
      ╲────────────────┬────────────────────╱
                       ▼
        ┌──────────────────────────────────┐      804
        │       OBTAIN DISTANCE TO           │
        │     WHITE LINE CANDIDATE           │
        └──────────────┬───────────────────┘
                       ▼
        ┌──────────────────────────────────┐      805
        │     CALCULATE DIFFERENCE           │
        │    FROM REFERENCE POSITION         │
        └──────────────┬───────────────────┘
                       ▼
              ╱─────────────────────╲              806
        No   ╱   DIFFERENCE <         ╲
      ◀──────┤   MINIMUM DISTANCE      ├
             ╲   DIFFERENCE?          ╱
              ╲─────────┬───────────╱
                        │ Yes
                        ▼
        ┌──────────────────────────────────┐      807
        │  MINIMUM DISTANCE DIFFERENCE =     │
        │          DIFFERENCE                │
        └──────────────┬───────────────────┘
                       ▼
        ┌──────────────────────────────────┐      808
        │     DISTANCE TO WHITE LINE =       │
        │   DISTANCE TO THE RELEVANT         │
        │     WHITE LINE CANDIDATE           │
        └──────────────┬───────────────────┘
                       ▼
                 ╱──────────────╲
                 │              │
                 ╲──────┬───────╱
                        ▼
                 ┌─────────────┐
                 │     End      │
                 └─────────────┘
```

# FIG.9

(a) PREVIOUS FRAME

(b) CURRENT FRAME

900

901-FrR

901-FrL

901-SR

901-SL

901-RrR

901-RrL

902-FrR

902-FrL

902-SR

902-SL

902-RrR

902-RrL

(c) SUPERIMPOSITION

(d) RESULT

903-FrL

903-FrR

903-SL

903-SR

903-RrR

903-RrL

902-FrR

902-FrL

902-RrR

# FIG.10

(a) PREVIOUS POSITION

LATERALLY-MOVED
DISTANCE

1002
902-FrR
902-FrL
902-RrR
1001-L
1001-R
PREVIOUS
POSITION L
PREVIOUS
POSITION R

(b) SETTING OF
REFERENCE POSITION

REFERENCE
POSITION L
REFERENCE
POSITION R
1003-L
1003-R
902-FrR
902-FrL
1002
1002
902-RrR
1001-L
1001-R

(c) SELECTION OF WHITE LINE CANDIDATE

REFERENCE
POSITION L
REFERENCE
POSITION R
1003-L
1003-R
902-FrL
902-RrR

# FIG.11

DIVISION LINE POSITION
ESTIMATION UNIT — 201

101-SL — CAMERA SL

201-SL — DIVISION LINE POSITION ESTIMATION UNIT SL

101-SR — CAMERA SR

201-SR — DIVISION LINE POSITION ESTIMATION UNIT SR

101-Rr — CAMERA Rr

201-Rr — DIVISION LINE POSITION ESTIMATION UNIT Rr

101-Fr — CAMERA Fr

201-Fr — DIVISION LINE POSITION ESTIMATION UNIT Fr

HISTORY ACCUMULATION UNIT — 1100

1102 — DIVISION LINE POSITION HISTORY

1101 — LATERAL POSITION HISTORY

1103 — DIVISION LINE POSITION DECISION UNIT

203 — TRAVEL AMOUNT ESTIMATION UNIT

# FIG.12

```
                    ┌──────────┐
                    │  Start   │
                    └────┬─────┘
                         ▼
        ┌───────●──────────────────────┐
        │   ┌────────────────────────┐  │
        │   │ ACCUMULATE DISTANCE    │  ╱ 1201
        │   │ TO EACH WHITE LINE     │
        │   │ CANDIDATE IN THE PAST  │
        │   └────────────┬───────────┘
        │                ▼
        │   ┌────────────────────────┐
        │   │ ACCUMULATE LATERAL     │  ╱ 1202
        │   │ POSITION CHANGES       │
        │   │ IN THE PAST            │
        │   └────────────┬───────────┘
        │                ▼
        │        ╱────────────────╲
        │       ╱  THE NUMBER      ╲   ╱ 1203
        └──────◁ OF ACCUMULATED FRAMES >▷
         No     ╲  THRESHOLD VALUE? ╱
                 ╲────────┬────────╱
                     Yes  ▼
              ┌────────────────────┐
              │  RIGHT AND LEFT    │
              └──────────┬─────────┘
                         ▼
              ┌────────────────────┐
              │ THE NUMBER OF WHITE │
              │ LINE CANDIDATES     │
              └──────────┬─────────┘
                         ▼
           ┌──────────────────────────┐
           │ CALCULATE SIMILARITY     │  ╱ 1204
           │ BETWEEN LATERAL POSITION │
           │ CHANGE AND WHITE LINE    │
           │ DISTANCE CHANGE          │
           └────────────┬─────────────┘
                        ▼
              ┌────────────────────┐  ╱ 1205
              │ DECIDE WEIGHT FOR  │
              │ WHITE LINE CANDIDATE│
              └──────────┬─────────┘
                         ▼
              ┌────────────────────┐  ╱ 1206
              │ STORE DISTANCE TO  │
              │ WHITE LINE CANDIDATE│
              └──────────┬─────────┘
                         ▼
              ┌────────────────────┐
              │                    │
              └──────────┬─────────┘
                         ▼
           ┌──────────────────────────┐  ╱ 1207
           │ CALCULATE WEIGHTED       │
           │ AVERAGE OF DISTANCE TO   │
           │ EACH WHITE LINE CANDIDATE│
           │ IN CURRENT FRAME         │
           └────────────┬─────────────┘
                        ▼
              ┌────────────────────┐
              │                    │
              └──────────┬─────────┘
                         ▼
              ┌────────────────────┐  ╱ 1208
              │ STORE LATERAL      │
              │ POSITION CHANGE    │
              └──────────┬─────────┘
                         ▼
                    ┌──────────┐
                    │   End    │
                    └──────────┘
```

# FIG.13

| Fr vs LATERAL POSITION | Sd vs LATERAL POSITION | Rr vs LATERAL POSITION |
|---|---|---|
| 1101 | 1101 | 1101 |
| 1102-Fr | 1102-SD | 1102-Rr |

| SIMILARITY CALCULATION UNIT Fr | SIMILARITY CALCULATION UNIT Sd | SIMILARITY CALCULATION UNIT Rr |
|---|---|---|

1301-Fr        1301-SD        1301-Rr

WEIGHT CALCULATION UNIT
· WEIGHT (Fr)=SIMILARITY (Fr)/(SIMILARITY (Fr)+SIMILARITY (Sd)+SIMILARITY (Rr))
· WEIGHT (Sd)=SIMILARITY (Sd)/(SIMILARITY (Fr)+SIMILARITY (Sd)+SIMILARITY (Rr))
· WEIGHT (Rr)=SIMILARITY (Rr)/(SIMILARITY (Fr)+SIMILARITY (Sd)+SIMILARITY (Rr))

1302

DISTANCE CALCULATION UNIT

DISTANCE = WEIGHT (Fr)×DISTANCE (Fr)
                    +WEIGHT (Sd)×DISTANCE (Sd)
                    +WEIGHT (Rr)×DISTANCE (Rr)

1303

# FIG.14

DIVISION LINE POSITION
ESTIMATION UNIT

101-SL

CAMERA
SL

201-SL
DIVISION LINE
POSITION
ESTIMATION
UNIT SL

201

101-SR
CAMERA
SR

201-SR
DIVISION LINE
POSITION
ESTIMATION
UNIT SR

101-Rr
CAMERA
Rr

201-Rr
DIVISION LINE
POSITION
ESTIMATION
UNIT Rr

101-Fr
CAMERA
Fr

201-Fr
DIVISION LINE
POSITION
ESTIMATION
UNIT Fr

202
DIVISION LINE
CANDIDATE
SELECTION UNIT

206
LANE CHANGE
JUDGMENT
UNIT

205
DIVISION LINE
POSITION
DECISION UNIT

204
REFERENCE
POSITION
SETTING UNIT

203
TRAVEL
AMOUNT
ESTIMATION
UNIT

# FIG.15

```
                    ┌─────────┐
                    │  Start  │
                    └────┬────┘
                         │
          ┌──────────────▼──────────────┐
          │    OBTAIN DISTANCES         │      1501
          │    TO WHITE LINES           │
          └──────────────┬──────────────┘
                         │
          ┌──────────────▼──────────────┐
          │  OBTAIN LATERAL POSITION    │      1502
          │       CHANGE OF             │
          │      OWN VEHICLE            │
          └──────────────┬──────────────┘
                         │
          ┌──────────────▼──────────────┐
          │  SELECT WHITE LINE ON       │      1503
          │      LANE CHANGE            │
          │    DIRECTION SIDE           │
          └──────────────┬──────────────┘
                         │
                  1504
            ◇ DISTANCE IS 0? ◇────────── No ──────────┐
                    │                                  │
                   Yes                                 │
                    │                                  │
              1505  │                                  │
          ◇ DISTANCE                                   │
        TO WHITE LINE ON THE                           │
   OTHER SIDE IS EQUAL TO OR LARGER ◇──── No ──────────┤
          THAN SPECIFIED                               │
              VALUE ?                                  │
                    │                                  │
                   Yes      1506                       │      1507
                    │                                  │
          ┌─────────▼─────────┐          ┌────────────▼────────────┐
          │  CHANGING LANES   │          │   NOT CHANGING LANES    │
          └─────────┬─────────┘          └────────────┬────────────┘
                    │                                  │
                    └──────────────┬───────────────────┘
                                   │
                             ┌─────▼─────┐
                             │    End    │
                             └───────────┘
```

35

# FIG.16

| THE NUMBER OF CUMULATIVE FRAMES | | | 1601 |
| FRAME INFORMATION | LATERALLY-MOVED DISTANCE | | 1603 |
| | FINAL WHITE LINE DISTANCE | | 1604 |
| | THE NUMBER OF WHITE LINE CANDIDATES | | 1605 |
| | WHITE LINE CANDIDATE INFORMATION | WHITE LINE CANDIDATE POSITION | 1607 |
| | | WHITE LINE CANDIDATE DISTANCE | 1608 |
| | : | | |
| : | | | |

1602
1606

# FIG.17

# FIG.18

```
         ┌─────────┐
         │  Start  │
         └─────────┘
              │
              ▼
   ┌──┬──────────────────────┬──┐
   │  │  ESTIMATE TRAVEL AMOUNT │  │──── 1801
   │  │    OF OWN VEHICLE       │  │
   └──┴──────────────────────┴──┘
              │
              ▼
      ╱──────────────────╲
     ╱   THE NUMBER        ╲
     ╲   OF CAMERAS        ╱
      ╲──────────────────╱
              │
              ▼
   ┌─────────────────────────┐
   │ RECOGNIZE WHITE LINE    │──── 1802
   │      CANDIDATES         │
   └─────────────────────────┘
              │
              ▼
   ┌─────────────────────────┐
   │  FIND DISTANCES TO WHITE │──── 1803
   │     LINE CANDIDATES      │
   └─────────────────────────┘
              │
              ▼
   ┌─────────────────────────┐
   │ BUFFER DISTANCES TO WHITE│──── 1804
   │     LINE CANDIDATES      │
   └─────────────────────────┘
              │
              ▼
   ┌─────────────────────────┐
   │ BUFFER WHITE LINE FEATURE AMOUNT │──── 1805
   └─────────────────────────┘
              │
              ▼
      ╱──────────────────╲
     ╱                     ╲
     ╲                     ╱
      ╲──────────────────╱
              │
              ▼
   ┌──┬──────────────────────┬──┐
   │  │ EXCLUDE INAPPROPRIATE │  │──── 1806
   │  │  WHITE LINE CANDIDATES │  │
   └──┴──────────────────────┴──┘
              │
              ▼
   ┌──┬──────────────────────┬──┐
   │  │ SET REFERENCE POSITION │  │──── 1807
   └──┴──────────────────────┴──┘
              │
              ▼
   ┌──┬──────────────────────┬──┐
   │  │  DECIDE DISTANCES TO   │  │──── 1808
   │  │      WHITE LINES       │  │
   └──┴──────────────────────┴──┘
              │
              ▼
         ┌─────────┐
         │   End   │
         └─────────┘
```

# FIG.19

# FIG.20

```
        ┌─────────┐
        │  Start  │
        └─────────┘
             │
             ▼
    ╱─────────────────╲
    │ RIGHT AND LEFT   │
    ╲─────────────────╱
             │
             ▼
  ┌────────────────────────┐
  │ TRANSFORM ALL WHITE    │──── 2001
  │ LINE FEATURE AMOUNTS   │
  │ TO WORLD COORDINATE    │
  │ SYSTEM                 │
  └────────────────────────┘
             │
             ▼
  ┌────────────────────────┐
  │ APPLY HOUGH            │──── 2002
  │ TRANSFORMATION TO      │
  │ WHITE LINE FEATURE     │
  │ AMOUNTS                │
  └────────────────────────┘
             │
             ▼
  No    ◇ CURVATURE             ──── 2003
  ◄─────│ OF WHITE LINE >       │
        ◇ THRESHOLD VALUE       │
             │ Yes
             ▼
  ┌────────────────────────┐
  │ TRANSFORM OWN VEHICLE  │──── 2004
  │ POSITION IN PREVIOUS   │
  │ FRAME TO POLAR         │
  │ COORDINATE SYSTEM      │
  │ REGARDING WHICH CENTER │
  │ OF CURVATURE IS SET AS │
  │ ITS ORIGIN             │
  └────────────────────────┘
             │
             ▼
  ┌────────────────────────┐
  │ ESTIMATE WHITE LINE    │──── 2005
  │ POSITION IN PREVIOUS   │
  │ FRAME ACCORDING TO     │
  │ POLAR COORDINATE       │
  │ SYSTEM                 │
  └────────────────────────┘
             │
             ▼
  ┌────────────────────────┐
  │ TRANSFORM OWN VEHICLE  │──── 2006
  │ POSITION IN PREVIOUS   │
  │ FRAME TO POLAR         │
  │ COORDINATE SYSTEM      │
  │ REGARDING WHICH CENTER │
  │ OF CURVATURE IS SET AS │
  │ ITS ORIGIN             │
  └────────────────────────┘
             │
             ▼
  ┌────────────────────────┐
  │ ESTIMATE WHITE LINE    │──── 2007
  │ POSITION IN CURRENT    │
  │ FRAME ACCORDING TO     │
  │ POLAR COORDINATE       │
  │ SYSTEM                 │
  └────────────────────────┘
             │
             ▼
  ┌────────────────────────┐
  │ FIND DISTANCE          │──── 2008
  │ DIFFERENCE TO OWN      │
  │ VEHICLE POSITION FROM  │
  │ CENTER OF CURVATURE    │
  └────────────────────────┘
             │
             ▼
    ╱─────────────────╲
    ╲─────────────────╱
             │
             ▼
        ┌─────────┐
        │   End   │
        └─────────┘
```

# FIG.21

```
            ( Start )
               │
               ▼
┌──────────────────────────────┐
│ OBTAIN TRAVEL AMOUNT OF OWN   │──── 2101
│ VEHICLE IN POLAR COORDINATE   │
│ SYSTEM                        │
└──────────────────────────────┘
               │
               ▼
┌──────────────────────────────┐
│ FIND DISTANCES TO WHITE LINES │──── 2102
│ FROM CENTER OF CURVATURE IN   │
│ PREVIOUS FRAME                │
└──────────────────────────────┘
               │
               ▼
  ╱────────────────────────────╲
 │ THE NUMBER OF                │
 │ WHITE LINE CANDIDATES        │
  ╲────────────────────────────╱
               │
               ▼
┌──────────────────────────────┐
│ OBTAIN DISTANCE TO WHITE LINE │──── 2103
│ CANDIDATE FROM CENTER         │
│ OF CURVATURE                  │
└──────────────────────────────┘
               │
               ▼
┌──────────────────────────────┐
│ FIND MOVEMENT DIRECTION OF    │──── 2104
│ WHITE LINE CANDIDATE IN POLAR │
│ COORDINATE SYSTEM             │
└──────────────────────────────┘
               │
               ▼
┌──────────────────────────────┐
│ COMPARE IT WITH MOVEMENT      │──── 2105
│ DIRECTION OF OWN VEHICLE      │
└──────────────────────────────┘
               │
               ▼
         ╱──────────╲
        ╱  MOVEMENT  ╲──── 2106
Yes ◄──╳ DIRECTIONS    ╳
        ╲ MATCH EACH  ╱
         ╲  OTHER?   ╱
           ╲──────╱
               │ No
               ▼
┌──────────────────────────────┐
│ EXCLUDE THE RELEVANT WHITE    │──── 2107
│ LINE CANDIDATE FROM BUFFER    │
└──────────────────────────────┘
               │
               ▼
      ╱──────────────────╲
     │                    │
      ╲──────────────────╱
               │
               ▼
            ( End )
```

# FIG.22

```
                        ┌─────────┐
                        │  Start  │
                        └────┬────┘
                             │
                             ▼
        ┌──────────────────────────────────────┐
        │   OBTAIN TRAVEL AMOUNT OF OWN VEHICLE │ ⟋ 2201
        │       IN POLAR COORDINATE SYSTEM      │
        └──────────────────┬───────────────────┘
                           │
                           ▼
        ┌──────────────────────────────────────┐
        │   OBTAIN DISTANCES TO WHITE LINES FROM│ ⟋ 2202
        │  CENTER OF CURVATURE IN PREVIOUS FRAME│
        └──────────────────┬───────────────────┘
                           │
                           ▼
           ╱──────────────────────────────╲
           │        RIGHT AND LEFT         │
           ╲──────────────┬───────────────╱
                          │
                          ▼
  ┌──────────────────────────────────────────────┐
  │ REFERENCE POSITION = PREVIOUS WHITE LINE DISTANCE − │ ⟋ 2203
  │        TRAVEL AMOUNT OF OWN VEHICLE           │
  └──────────────────────┬───────────────────────┘
                         │
                         ▼
           ╱──────────────────────────────╲
           │                              │
           ╲──────────────┬───────────────╱
                          │
                          ▼
                   ┌─────────┐
                   │   End   │
                   └─────────┘
```

# FIG.23

```
                    ┌─────────┐
                    │  Start  │
                    └────┬────┘
                         ▼
        ┌───────────────────────────────┐        2301
        │   OBTAIN REFERENCE POSITION    │
        └───────────────┬───────────────┘
                         ▼
        ┌───────────────────────────────┐        2302
        │ MINIMUM DISTANCE DIFFERENCE = 1m│
        └───────────────┬───────────────┘
                         ▼
        ┌───────────────────────────────┐        2303
        │ DISTANCE FROM CENTER OF CURVATURE│
        │   TO WHITE LINE = INDEFINITE VALUE│
        └───────────────┬───────────────┘
                         ▼
        ╱─────────────────────────────────╲
        │         THE NUMBER OF             │
        │ REMAINING WHITE LINE CANDIDATES   │
        ╲─────────────────────────────────╱
                         ▼
        ┌───────────────────────────────┐
        │  OBTAIN DISTANCE FROM CENTER OF │        2304
        │     CURVATURE TO WHITE LINE     │
        │          CANDIDATE              │
        └───────────────┬───────────────┘
                         ▼
        ┌───────────────────────────────┐        2305
        │    CALCULATE DIFFERENCE FROM    │
        │       REFERENCE POSITION        │
        └───────────────┬───────────────┘
                         ▼
                  ╱────────────╲                  2306
            ┌────╱  DIFFERENCE < ╲
       No   │    ╲ MINIMUM DISTANCE╱
            │     ╲  DIFFERENCE? ╱
            │       ╲──────────╱
            │           │ Yes
            │           ▼
            │  ┌───────────────────────────────┐  2307
            │  │ MINIMUM DISTANCE DIFFERENCE =   │
            │  │          DIFFERENCE             │
            │  └───────────────┬───────────────┘
            │                  ▼
            │  ┌───────────────────────────────┐
            │  │ TRANSFORM DISTANCE FROM CENTER  │
            │  │ OF CURVATURE TO THE RELEVANT WHITE│ 2308
            │  │ LINE TO DISTANCE FROM OWN VEHICLE│
            │  │  POSITION IN CURRENT FRAME      │
            │  └───────────────┬───────────────┘
            │                  ▼
            │  ┌───────────────────────────────┐
            │  │   DISTANCE FROM OWN VEHICLE     │  2309
            │  │  TO WHITE LINE = DISTANCE TO    │
            │  │ THE RELEVANT WHITE LINE CANDIDATE│
            │  └───────────────┬───────────────┘
            │                  ▼
            └──────►╱─────────────────╲
                    ╲─────────────────╱
                         ▼
                    ┌─────────┐
                    │   End   │
                    └─────────┘
```

<div align="center">**INTERNATIONAL SEARCH REPORT**</div>

| International application No. |
| --- |
| PCT/JP2019/011181 |

**A. CLASSIFICATION OF SUBJECT MATTER**
Int.Cl. G06T7/60(2017.01)i, G08G1/16(2006.01)i

According to International Patent Classification (IPC) or to both national classification and IPC

**B. FIELDS SEARCHED**

Minimum documentation searched (classification system followed by classification symbols)
Int.Cl. G06T7/00-7/90, G08G1/16

| Documentation searched other than minimum documentation to the extent that such documents are included in the fields searched | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2016-206868 A (ALPINE ELECTRONICS, INC.) 08 December 2016, entire text, all drawings & US 2016/0314358 A1, entire text, all drawings | 1–4 |
| A | JP 2018-84492 A (NISSAN MOTOR CO., LTD.) 31 May 2018, entire text, all drawings (Family: none) | 1–4 |
| A | JP 2016-24777 A (DENSO CORP.) 08 February 2016, entire text, all drawings & US 2017/0147889 A1, entire text, all drawings | 1–4 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 24 May 2019 (24.05.2019) | 04 June 2019 (04.06.2019) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015064735 A
- JP 2018179483 A